# EUROPEAN PATENT APPLICATION

(11) **EP 4 832 380 A1**
(43) Date of publication of application: **28.10.2026**
(21) Application number: 25738475.0
(22) Date of filing: 08.01.2025
(51) Int. Cl.: H04B 17/15

(54) **RADIO FREQUENCY DATA EVALUATION METHOD AND APPARATUS**

(30) Priority: 09.01.2024 CN 202410035381
(71) Applicant: Huawei Technologies Co., Ltd., Shenzhen, Guangdong 518129 (CN)
(72) Inventor: HE, Jia, Shenzhen, Guangdong 518129 (CN); ZHOU, Zhi, Shenzhen, Guangdong 518129 (CN); TANG, Hao, Shenzhen, Guangdong 518129 (CN)
(74) Representative: Goddar, Heinz J.
(86) International application number: PCT/CN2025/071373
(87) International publication number: WO 2025/148946

(57) **Abstract**

This application provides a method for evaluating radio frequency data, and an apparatus, to improve the accuracy of radio frequency channel mapping data, in the field of wireless communication technologies. In the method, a first communication apparatus receives a quality measurement request. The first communication apparatus sends, based on the quality measurement request, one or more of scatterer quality, radio frequency channel quality, and radio frequency channel mapping data application quality. The scatterer quality represents accuracy of a location of a scatterer included in first radio frequency channel mapping data, the radio frequency channel quality represents a deviation between a channel state measurement value and a predicted channel state value included in the first radio frequency channel mapping data, and the radio frequency channel mapping data application quality represents usage quality of the first radio frequency channel mapping data. According to the foregoing solution, the first communication apparatus may determine, based on the quality measurement request, one or more of the scatterer quality, the radio frequency channel quality, and the radio frequency channel mapping data application quality, to evaluate the accuracy of radio frequency channel mapping data.

## Description

### CROSS-REFERENCE TO RELATED APPLICATIONS

This application claims priority to Chinese Patent Application No. 202410035381.0, filed with the China National Intellectual Property Administration on January 9, 2024 and entitled "METHOD FOR EVALUATING RADIO FREQUENCY DATA, AND APPARATUS", which is incorporated herein by reference in its entirety.

### TECHNICAL FIELD

This application relates to the field of wireless communication technologies, and in particular, to a method for evaluating radio frequency data, and an apparatus.

### BACKGROUND

In sensing-assisted communication, using environment information obtained through sensing to improve spectral efficiency or to build more robust, resilient, and easily recoverable networks has become a major topic. Important aspects include sensing-assisted channel prediction and sensing-assisted positioning, where environment information obtained through sensing is used to predict states of radio frequency channels for communication, positioning, and the like.

However, environment information obtained through sensing may contain errors. Such errors may arise from differences between the environment information obtained through sensing and the actual physical or electromagnetic environment, or from losses introduced when the environment information obtained through sensing is compressed to reduce communication pressure, and subsequently decompressed. Therefore, the accuracy of environment information obtained through sensing affects the performance of services such as sensing-assisted channel prediction and sensing-assisted positioning.

### SUMMARY

This application provides a method for evaluating radio frequency data, and an apparatus, to improve the performance of sensing-assisted communication.

According to a first aspect, a method for evaluating radio frequency data is provided. The method may be performed by a first communication apparatus or a chip/a chip system. The first communication apparatus may be a terminal device or a network device. The following description uses an example in which the first communication apparatus performs the method. In the method, the first communication apparatus receives a quality measurement request. The first communication apparatus sends, based on the quality measurement request, one or more of scatterer quality, radio frequency channel quality, and radio frequency channel mapping data application quality. The scatterer quality represents accuracy of a location of a scatterer included in first radio frequency channel mapping data, the radio frequency channel quality represents a deviation between a channel state measurement value and a predicted channel state value included in the first radio frequency channel mapping data, and the radio frequency channel mapping data application quality represents usage quality of the first radio frequency channel mapping data.

According to the foregoing solution, the first communication apparatus may obtain radio frequency channel mapped data by using environment information obtained through sensing, and determine, based on the quality measurement request, one or more of the scatterer quality, the radio frequency channel quality, and the radio frequency channel mapping data application quality, to evaluate accuracy of the radio frequency channel mapping data, and evaluate whether the radio frequency channel mapping data can be applied to sensing-assisted communication such as sensing-assisted channel prediction and sensing-assisted positioning, to improve performance of sensing-assisted communication.

In a possible implementation, the first communication apparatus sends a plurality of items among the scatterer quality, the radio frequency channel quality, and the radio frequency channel mapping data application quality. One or two items among the scatterer quality, the radio frequency channel quality, and the radio frequency channel mapping data application quality meet a first sending condition. For example, when the plurality of pieces include the scatterer quality and the radio frequency channel quality, that one or two items among the plurality of items meet the first sending condition may be that one of the plurality of items meets the first sending condition, for example, the scatterer quality meets a first requirement. For another example, when the plurality of items include the scatterer quality and the radio frequency channel mapping data application quality, that one or two items among the plurality of items meet the first sending condition may be that one of the plurality of items meets the first sending condition, for example, the scatterer quality meets a first requirement. For another example, when the plurality of items include the radio frequency channel quality and the radio frequency channel mapping data application quality, that one or two items among the plurality of items meet the first sending condition may be that one of the plurality of items meets the first sending condition, for example, the radio frequency channel quality meets a second requirement. For another example, when the plurality of items include the scatterer quality, the radio frequency channel quality, and the radio frequency channel mapping data application quality, that one or two items among the plurality of items meet the first sending condition may be that two of the plurality of items meet the first sending condition, for example, the scatterer quality meets a first requirement, and the radio frequency channel quality meets a second requirement.

According to the foregoing solution, the first communication apparatus may send the plurality of items among the scatterer quality, the radio frequency channel quality, and the radio frequency channel mapping data application quality to a second communication apparatus when one or two items among the scatterer quality, the radio frequency channel quality, and the radio frequency channel mapping data application quality meet the first sending condition. It may be understood that, when one or two items among the scatterer quality, the radio frequency channel quality, and the radio frequency channel mapping data application quality do not meet the first sending condition, for example, when the plurality of items include the scatterer quality and the radio frequency channel quality, and the scatterer quality does not meet the first requirement, the radio frequency channel quality may not be sent; when the plurality of items include the scatterer quality and the radio frequency channel mapping data application quality, and the scatterer quality does not meet the first requirement, the radio frequency channel mapping data application quality may not be sent; when the plurality of items include the radio frequency channel quality and the radio frequency channel mapping data application quality, and the radio frequency channel quality does not meet the second requirement, the radio frequency channel quality may not be sent, so that system overheads can be reduced.

In a possible implementation, the plurality of items include the scatterer quality and the radio frequency channel quality, and meeting the first sending condition includes the scatterer quality meeting the first requirement.

According to the foregoing solution, when quality of a scatterer meets the first requirement, it may be considered that accuracy of an estimated location of the scatterer is high. Therefore, accuracy of the radio frequency channel mapping data generated based on an environment reconstruction result including the scatterer is also high. Therefore, the radio frequency channel quality may be evaluated in conjunction with the second communication apparatus, and the radio frequency channel quality may be sent to the second communication apparatus. If the scatterer quality does not meet the first requirement, the first communication apparatus and the second communication apparatus do not perform a procedure of evaluating the radio frequency channel quality, and the first communication apparatus does not send the radio frequency channel quality to the second communication apparatus, so that system overheads can be reduced.

In a possible implementation, the plurality of items include the scatterer quality and the radio frequency channel mapping data application quality, and meeting the first sending condition includes the scatterer quality meeting the first requirement.

According to the foregoing solution, when the quality of the scatterer meets the first requirement, it may be considered that the accuracy of the estimated location of the scatterer is high. Therefore, the accuracy of the radio frequency channel mapping data generated based on the environment reconstruction result including the scatterer is also high. Therefore, the radio frequency channel mapping data may be used for sensing-assisted communication. The first communication apparatus and the second communication apparatus may evaluate the radio frequency channel mapping data application quality, so that the radio frequency channel mapping data application quality can be sent to the second communication apparatus. If the scatterer quality does not meet the first requirement, the first communication apparatus and the second communication apparatus do not evaluate the radio frequency channel mapping data application quality, and the first communication apparatus does not send the radio frequency channel mapping data application quality to the second communication apparatus, so that system overheads can be reduced.

In a possible implementation, the plurality of items include the radio frequency channel quality and the radio frequency channel mapping data application quality, and meeting the first sending condition includes the radio frequency channel quality meeting the second requirement.

According to the foregoing solution, when the radio frequency channel quality meets the second requirement, it may be considered that the accuracy of the radio frequency channel mapping data is high. Therefore, the radio frequency channel mapping data may be used for sensing-assisted communication. The first communication apparatus and the second communication apparatus may evaluate the radio frequency channel mapping data application quality, so that the radio frequency channel mapping data application quality can be sent to the second communication apparatus. If the radio frequency channel quality does not meet the second requirement, the first communication apparatus and the second communication apparatus do not evaluate the radio frequency channel mapping data application quality, and the first communication apparatus does not send the radio frequency channel mapping data application quality to the second communication apparatus, so that system overheads can be reduced.

In a possible implementation, the plurality of items include the scatterer quality, the radio frequency channel quality, and the radio frequency channel mapping data application quality, and meeting the first sending condition includes the scatterer quality meeting the first requirement and the radio frequency channel quality meeting the second requirement.

According to the foregoing solution, when the quality of the scatterer meets the first requirement and the radio frequency channel quality meets the second requirement, it may be considered that the accuracy of the radio frequency channel mapping data is high. Therefore, the radio frequency channel mapping data may be used for sensing-assisted communication. The first communication apparatus and the second communication apparatus may evaluate the radio frequency channel mapping data application quality, so that the radio frequency channel mapping data application quality can be sent to the second communication apparatus. If the scatterer quality does not meet the first requirement, the first communication apparatus and the second communication apparatus do not evaluate the radio frequency channel quality and the radio frequency channel mapping data application quality, and the first communication apparatus does not send the radio frequency channel quality and the radio frequency channel mapping data application quality to the second communication apparatus, so that system overheads can be reduced. If the scatterer quality meets the first requirement, but the radio frequency channel quality does not meet the second requirement, the first communication apparatus and the second communication apparatus do not evaluate the radio frequency channel mapping data application quality, and the first communication apparatus does not send the radio frequency channel mapping data application quality to the second communication apparatus, so that system overheads can be reduced.

In a possible implementation, the first communication apparatus adjusts, if the scatterer quality does not meet the first requirement, the scatterer quality to meet the first requirement before sending the radio frequency channel quality.

According to the foregoing solution, when the scatterer quality does not meet the first requirement, the first communication apparatus may not send the radio frequency channel quality, to reduce system overheads, adjust the scatterer quality to meet the first requirement before sending the radio frequency channel quality, to evaluate accuracy of the generated radio frequency channel mapping data.

In a possible implementation, the first communication apparatus adjusts, if the scatterer quality does not meet the first requirement, the scatterer quality to meet the first requirement before sending the radio frequency channel mapping data application quality; or adjusts, if the radio frequency channel quality does not meet the second requirement, the radio frequency channel quality to meet the second requirement before sending the radio frequency channel mapping data application quality.

According to the foregoing solution, when the scatterer quality does not meet the first requirement or the scatterer quality does not meet the second requirement, the first communication apparatus may not send the radio frequency channel mapping data application quality, to reduce system overheads; adjust the scatterer quality to meet the first requirement or adjust the radio frequency channel quality to meet the second requirement, and then use the radio frequency channel mapping data for sensing-assisted communication, to evaluate application quality of the generated radio frequency channel mapped data.

In a possible implementation, the radio frequency channel mapping data application quality does not meet a third requirement, and the first communication apparatus receives second radio frequency channel mapping data, where a parameter included in the second radio frequency channel mapping data is different from a parameter included in the first radio frequency channel mapping data, and/or a compression manner of the second radio frequency channel mapping data is different from a compression manner of the first radio frequency channel mapping data.

According to this solution, when the radio frequency channel mapping data application quality does not meet the third requirement, it may be considered that the accuracy of the radio frequency channel mapping data is low. This problem may be caused by a fact that to reduce transmission pressure, the second communication apparatus compresses the radio frequency channel mapping data and sends the compressed radio frequency channel mapping data to the first communication apparatus, and then the first communication apparatus decompresses the radio frequency channel mapping data, or may be caused by an inaccurate parameter, for example, a communication link, selected when the second communication apparatus generates the radio frequency channel mapping data. Therefore, the second communication apparatus may adjust the parameter selected when the radio frequency channel mapping data is generated and/or the compression manner of the radio frequency channel mapping data, to improve accuracy and/or receiving performance of the radio frequency channel mapping data.

According to a second aspect, a method for evaluating radio frequency data is provided. The method may be performed by a second communication apparatus or a chip/a chip system. The second communication apparatus may be a terminal device or a network device. The following description uses an example in which the second communication apparatus performs the method. In the method, the second communication apparatus sends a quality measurement request. The second communication apparatus receives one or more of scatterer quality, radio frequency channel quality, and radio frequency channel mapping data application quality. The scatterer quality represents accuracy of a location of a scatterer included in first radio frequency channel mapping data, the radio frequency channel quality represents a deviation between a channel state measurement value and a predicted channel state value included in the first radio frequency channel mapping data, and the radio frequency channel mapping data application quality represents usage quality of the first radio frequency channel mapping data.

In a possible implementation, the second communication apparatus receives a plurality of items among the scatterer quality, the radio frequency channel quality, and the radio frequency channel mapping data application quality. The plurality of items among the scatterer quality, the radio frequency channel quality, and the radio frequency channel mapping data application quality meet the first sending condition.

In a possible implementation, the plurality of items include the scatterer quality and the radio frequency channel quality, and meeting the first sending condition includes the scatterer quality meeting a first requirement.

In a possible implementation, the plurality of items include the scatterer quality and the radio frequency channel mapping data application quality, and meeting the first sending condition includes the scatterer quality meeting a first requirement.

In a possible implementation, the plurality of items include the radio frequency channel quality and the radio frequency channel mapping data application quality, and meeting the first sending condition includes the radio frequency channel quality meeting a second requirement.

In a possible implementation, the plurality of items include the scatterer quality, the radio frequency channel quality, and the radio frequency channel mapping data application quality, and meeting the first sending condition includes the scatterer quality meeting a first requirement and the radio frequency channel quality meeting a second requirement.

In a possible implementation, the radio frequency channel mapping data application quality does not meet a third requirement, and the second communication apparatus sends second radio frequency channel mapping data, where a parameter included in the second radio frequency channel mapping data is different from a parameter included in the first radio frequency channel mapping data, and/or a compression manner of the second radio frequency channel mapping data is different from a compression manner of the first radio frequency channel mapping data.

According to a third aspect, a communication apparatus is provided, including a processing unit and a transceiver unit.

The transceiver unit is configured to receive a quality measurement request. The processing unit is configured to determine, based on the quality measurement request, one or more of scatterer quality, radio frequency channel quality, and radio frequency channel mapping data application quality. The scatterer quality represents accuracy of a location of a scatterer included in first radio frequency channel mapping data, the radio frequency channel quality represents a deviation between a channel state measurement value and a predicted channel state value included in the first radio frequency channel mapping data, and the radio frequency channel mapping data application quality represents usage quality of the first radio frequency channel mapping data. The transceiver unit is further configured to send one or more of the scatterer quality, the radio frequency channel quality, and the radio frequency channel mapping data application quality.

In a possible implementation, the transceiver unit is further configured to send the plurality of items among the scatterer quality, the radio frequency channel quality, and the radio frequency channel mapping data application quality. The plurality of items among the scatterer quality, the radio frequency channel quality, and the radio frequency channel mapping data application quality meet a first sending condition.

In a possible implementation, the plurality of items include the scatterer quality and the radio frequency channel quality, and meeting the first sending condition includes the scatterer quality meeting a first requirement.

In a possible implementation, the plurality of items include the scatterer quality and the radio frequency channel mapping data application quality, and meeting the first sending condition includes the scatterer quality meeting a first requirement.

In a possible implementation, the plurality of items include the radio frequency channel quality and the radio frequency channel mapping data application quality, and meeting the first sending condition includes the radio frequency channel quality meeting a second requirement.

In a possible implementation, the plurality of items include the scatterer quality, the radio frequency channel quality, and the radio frequency channel mapping data application quality, and meeting the first sending condition includes the scatterer quality meeting a first requirement and the radio frequency channel quality meeting a second requirement.

In a possible implementation, the transceiver unit is further configured to: adjust, if the scatterer quality does not meet the first requirement, the scatterer quality to meet the first requirement before sending the radio frequency channel quality.

In a possible implementation, the transceiver unit is further configured to: adjust, if the scatterer quality does not meet the first requirement, the scatterer quality to meet the first requirement before sending the radio frequency channel mapping data application quality. Alternatively, the transceiver unit is further configured to: adjust, if the radio frequency channel quality does not meet the second requirement, the radio frequency channel quality to meet the second requirement before sending the radio frequency channel mapping data application quality.

In a possible implementation, the radio frequency channel mapping data application quality does not meet a third requirement, and the transceiver unit is further configured to receive second radio frequency channel mapping data, where a parameter included in the second radio frequency channel mapping data is different from a parameter included in the first radio frequency channel mapping data, and/or a compression manner of the second radio frequency channel mapping data is different from a compression manner of the first radio frequency channel mapping data.

According to a fourth aspect, a communication apparatus is provided, including a processing unit and a transceiver unit.

The processing unit is configured to generate a quality measurement request. The transceiver unit is configured to send the quality measurement request. The transceiver unit is further configured to receive one or more of scatterer quality, radio frequency channel quality, and radio frequency channel mapping data application quality. The scatterer quality represents accuracy of a location of a scatterer included in first radio frequency channel mapping data, the radio frequency channel quality represents a deviation between a channel state measurement value and a predicted channel state value included in the first radio frequency channel mapping data, and the radio frequency channel mapping data application quality represents usage quality of the first radio frequency channel mapping data.

In a possible implementation, the transceiver unit is further configured to receive the plurality of items among the scatterer quality, the radio frequency channel quality, and the radio frequency channel mapping data application quality. The plurality of items among the scatterer quality, the radio frequency channel quality, and the radio frequency channel mapping data application quality meet a first sending condition.

In a possible implementation, the plurality of items include the scatterer quality and the radio frequency channel quality, and meeting the first sending condition includes the scatterer quality meeting a first requirement.

In a possible implementation, the plurality of items include the scatterer quality and the radio frequency channel mapping data application quality, and meeting the first sending condition includes the scatterer quality meeting a first requirement.

In a possible implementation, the plurality of items include the radio frequency channel quality and the radio frequency channel mapping data application quality, and meeting the first sending condition includes the radio frequency channel quality meeting a second requirement.

In a possible implementation, the plurality of items include the scatterer quality, the radio frequency channel quality, and the radio frequency channel mapping data application quality, and meeting the first sending condition includes the scatterer quality meeting a first requirement and the radio frequency channel quality meeting a second requirement.

In a possible implementation, the radio frequency channel mapping data application quality does not meet a third requirement, and the transceiver unit is further configured to send second radio frequency channel mapping data, where a parameter included in the second radio frequency channel mapping data is different from a parameter included in the first radio frequency channel mapping data, and/or a compression manner of the second radio frequency channel mapping data is different from a compression manner of the first radio frequency channel mapping data.

According to a fifth aspect, this application provides a communication apparatus, including a processor, where the processor is coupled to a memory. The memory is configured to store a computer program or instructions, and the processor is configured to execute the computer program or the instructions, to perform the method in each implementation of the first aspect and the second aspect. The memory may be located inside or outside the apparatus. There are one or more processors.

According to a sixth aspect, this application provides a communication apparatus, including a processor and an interface circuit. The interface circuit is configured to communicate with another apparatus, and the processor is configured to perform the method in each implementation of the first aspect and the second aspect.

According to a seventh aspect, a communication apparatus is provided. The apparatus includes a logic circuit and an input/output interface.

According to an eighth aspect, this application provides a communication system, including a first communication apparatus and a second communication apparatus that are configured to perform the method in the implementations of the first aspect and the second aspect.

According to a ninth aspect, this application further provides a chip system, including a processor, configured to perform the method in each implementation of the first aspect and the second aspect.

According to a tenth aspect, this application further provides a computer program product, including computer-executable instructions. When the computer-executable instructions are run on a computer, the method in each implementation of the first aspect and the second aspect is performed.

According to an eleventh aspect, this application further provides a computer-readable storage medium. The computer-readable storage medium stores a computer program or instructions. When the instructions are run on a computer, the method in each implementation of the first aspect and the second aspect is implemented.

For technical effects achieved in the second aspect to the eleventh aspect, refer to the technical effects in the first aspect and the second aspect. Details are not described herein again.

### BRIEF DESCRIPTION OF DRAWINGS

FIG. 1 is a diagram of an application scenario of a sensing technology;
FIG. 2A is a diagram of monostatic sensing;
FIG. 2B is a diagram of bistatic sensing;
FIG. 3 is a diagram of a communication system according to an embodiment of this application;
FIG. 4A is a diagram of a physical environment map according to an embodiment of this application;
FIG. 4B is a diagram of an environment reconstruction result according to an embodiment of this application;
FIG. 4C is a diagram of a grid according to an embodiment of this application;
FIG. 4D is a diagram of a predicted channel state value according to an embodiment of this application;
FIG. 5 is an example flowchart of a method for evaluating scatterer quality according to an embodiment of this application;
FIG. 6 is an example flowchart of a method for evaluating radio frequency channel quality according to an embodiment of this application;
FIG. 7a and FIG. 7b are a diagram of updating radio frequency channel quality according to an embodiment of this application;
FIG. 8 is an example flowchart of a method for evaluating radio frequency channel mapping data application quality according to an embodiment of this application;
FIG. 9 is an example flowchart of a method for evaluating radio frequency data according to an embodiment of this application;
FIG. 10 is an example flowchart of another method for evaluating radio frequency data according to an embodiment of this application;
FIG. 11 is a diagram of a method for managing radio frequency channel mapping data according to an embodiment of this application;
FIG. 12 is a diagram of a communication apparatus according to an embodiment of this application;
FIG. 13 is a diagram of another communication apparatus according to an embodiment of this application;
FIG. 14 is a diagram of another communication apparatus according to an embodiment of this application; and
FIG. 15 is a diagram of another communication apparatus according to an embodiment of this application.

### DESCRIPTION OF EMBODIMENTS

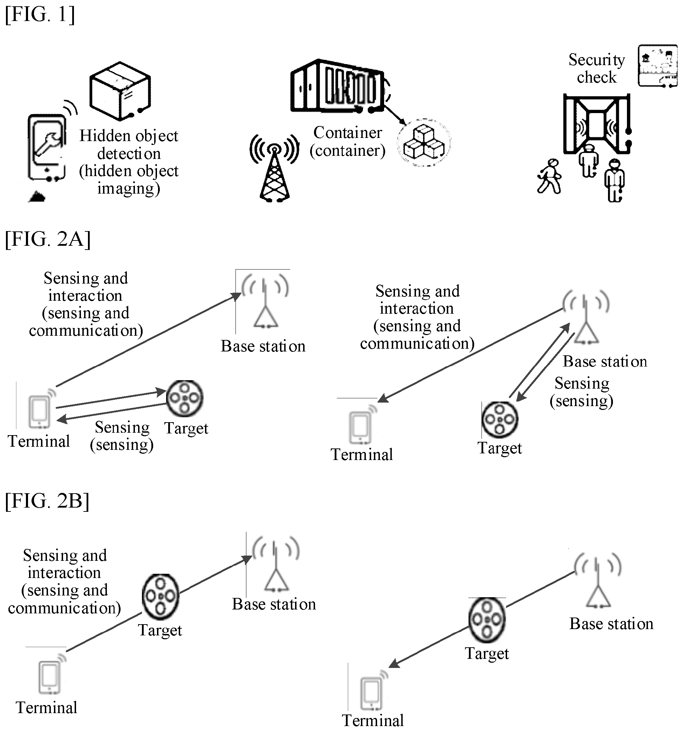

For ease of understanding of the technical solutions provided in embodiments of this application, the following describes technical terms used in embodiments of this application.
(1) Sensing, also referred to as wireless sensing, means emitting electromagnetic energy into space, and receiving an electromagnetic wave reflected by an object in the space, to calculate information about the object, for example, parameters such as a location, a direction, a height, a speed, a size, and a movement path, and detect an internal and external shape and structure of the object. Transmission, echoes, reflection, and scattering of radio waves are explored, to sense and better understand a physical world. As one of electromagnetic wave sensing technologies, a wireless sensing technology can be used as an important alternative technology for aspects of security check, hidden object detection, and environment reconstruction due to penetrability and security of the wireless sensing technology, as shown in FIG. 1.
(2) An integrated sensing and communication system, also referred to as an integrated sensing and communication system, integrates (integrate) an electromagnetic signal used for communication and an electromagnetic signal used for sensing for use. A conventional active positioning target is mainly a terminal device that can emit an electromagnetic wave, for example, a mobile phone, a vehicle, or an internet of things (internet of things, IoT) device. An object of virtual environment reconstruction further includes passive objects, such as buildings, urban facilities (billboards, bridges, and the like), and traffic conditions (vehicles and bicycles). An electromagnetic wave signal propagated in a spatial environment is received, to solve a composition of the spatial environment, and detection and reconstruction of a virtual environment (an active object, a passive object, and a device) are performed, to achieve further assistance in positioning or perception-assisted communication performance improvement. A network device and a terminal device are main devices for virtual environment reconstruction. Sensing quality is related to a communication and sensing resource, space, time, a frequency band, power consumption, and a station. The station may be a network device, a terminal device, a wireless terminal access device (customer premises equipment, CPE), or the like.

For example, the space may include a quantity of beams, which can affect a sensing angle range. The time includes a sensing symbol length, which can affect sensing azimuth precision. The frequency band includes a sensing bandwidth, which can affect sensing distance precision. The power consumption includes power of a sensing signal, which can affect a sensing distance range. The station may include a communication capacity, which can affect sensing fusion precision.

A transmitter and a receiver of a sensing signal may be classified into monostatic (monostatic), bistatic (bistatic), and multistatic (multistatic) based on whether the transmitter and the receiver are co-sited or inter-sited. A multistatic system is generally a hybrid system including a monostatic system and a bistatic system. Two typical integrated sensing and communication system architectures are shown in FIG. 2A and FIG. 2B. It may be understood that monostatic sensing may also be referred to as single-station sensing, that is, sensing is performed by using one station. Similarly, multistatic sensing may also be referred to as multi-station sensing, that is, sensing is performed by using two or more stations. Similarly, multistatic sensing may be referred to as multi-station sensing.

FIG. 2A shows a monostatic integrated sensing and communication system. In the monostatic integrated sensing and communication system, a sensing transmitter and a sensing receiver are located at a same location, and a data payload may be used as a sensing signal. Therefore, a sensing function does not consume communication resources. In addition, because the transmitter and the receiver are at the same location, non-ideal factors such as synchronization do not exist, and the sensing algorithm complexity and estimation precision are good. In monostatic environment reconstruction, because self-transmission and self-reception is used, a signal angle range that can be detected is strongly related to an environmental incidence angle. A reflected signal of an object quickly attenuates as the incidence angle increases. That is, an angle of view range for monostatic environment reconstruction is greatly affected by a material and a placement angle of a target object. In monostatic sensing, most components of an echo signal have single-bounce (single-bounce) paths, which satisfies the radar assumption. Therefore, there are fewer ill-conditioned equation problems when a spatial environment is solved, thereby implementing higher solution precision of the spatial environment.

FIG. 2B shows a bistatic integrated sensing and communication system. In the bistatic sensing and communication integrated system, a sensing receiver and a sensing transmitter are located at different locations, and a dedicated pilot or known signal needs to be used for a sensing signal. Therefore, a sensing function consumes communication resources. In addition, because the transmitter and the receivers are at different locations, there are non-ideal factors such as synchronization and phase noise. Therefore, a sensing algorithm is complex, estimation precision is poor, and a complex calibration algorithm is required for processing. In bistatic sensing, because self-transmission and other-receiving is used, an environment angle that can be detected is large, and a sensing angle of view has large coverage as a terminal moves. In addition, an echo signal has abundant components, has a large quantity of multiple-bounce paths (bounce is greater than or equal to 2), and has high power. In rich-scattering urban space, a large quantity of multiple-bounce paths introduce an ill-conditioned equation, resulting in shadow space and incorrect solutions during virtual environment solving.

The technical solutions in embodiments of this application may be applied to a new radio (New Radio, NR) system, a long term evolution (Long Term Evolution, LTE) system, an LTE frequency division duplex (Frequency Division Duplex, FDD) system, an LTE time division duplex (Time Division Duplex, TDD) system, a worldwide interoperability for microwave access (Worldwide Interoperability for Microwave Access, WiMAX) communication system, a next-generation wireless communication system such as 6G, and the like. This is not limited herein.

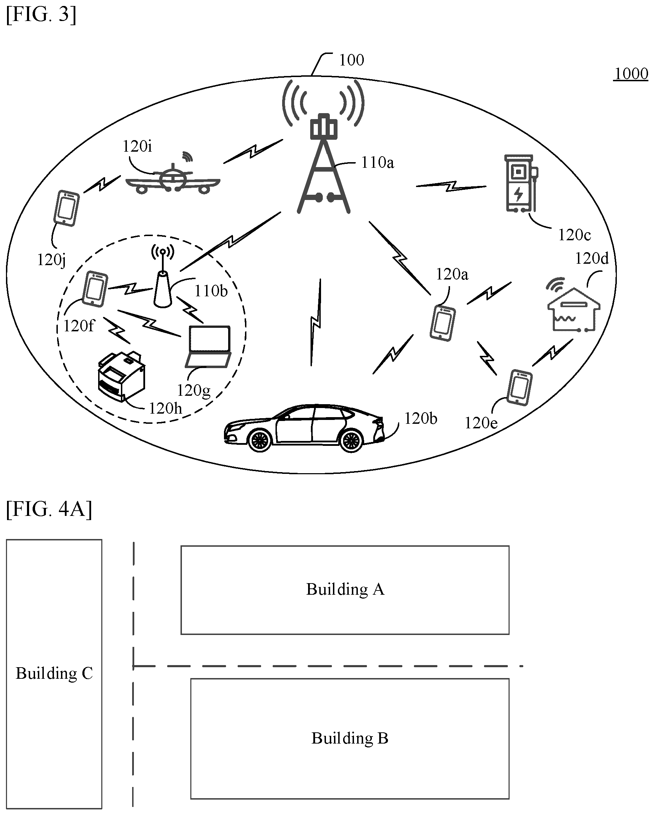

FIG. 3 is a diagram of an architecture of a communication system 1000 to which an embodiment of this application is applied. As shown in FIG. 3, the communication system includes a radio access network 100. The radio access network 100 may include at least one network device (110a and/or 110b in FIG. 3), and may further include at least one terminal apparatus (at least one of 120a to 120j in FIG. 3). The terminal apparatus is connected to an access network device in a wireless manner, and the access network device is connected to a core network device in a wireless or wired manner. Terminal apparatuses may be connected to each other in a wired or wireless manner, and network devices may be connected to each other in a wired or wireless manner. FIG. 3 is merely a diagram. The communication system may further include another network device, for example, a wireless relay device and a wireless backhaul device, which are not drawn in FIG. 3.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes a part of functions of the base station, for example, may be a central unit (central unit, CU) or a distributed unit (distributed unit, DU). The CU performs functions of a radio resource control protocol and a packet data convergence protocol (packet data convergence protocol, PDCP) of the base station, and may further perform functions of a service data adaptation protocol (service data adaptation protocol, SDAP). The DU performs functions of a radio link control layer and a medium access control (medium access control, MAC) layer of the base station, and may further perform some or all functions of a physical layer. For specific descriptions of the foregoing protocol layers, refer to related technical specifications of the 3rd generation partnership project (3rd generation partnership project, 3GPP). The network device may be a macro base station (for example, 110a in FIG. 3), may be a micro base station or an indoor base station (for example, 110b in FIG. 3), or may be a relay node, a donor node, or the like. A specific technology and a specific device form that are used by the network device are not limited in embodiments of this application.

In another possible scenario, a plurality of RAN nodes collaborate to assist the terminal in implementing radio access, and different RAN nodes respectively implement some functions of the base station. For example, the RAN node may be a CU, a DU, a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device is a user-side device having a wireless transceiver function. The terminal device may also be referred to as user equipment (user equipment, UE), a mobile station, a mobile terminal, or the like. The terminal apparatus may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, a smart office, smart wearable, smart transportation, and a smart city. The terminal apparatus may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific apparatus form that are used by the terminal apparatus are not limited in embodiments of this application.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 3 may be configured as a mobile network device. For the terminal device 120j that accesses the radio access network 100 through 120i, the terminal device 120i is a network device. However, for the network device 110a, 120i is a terminal device, that is, 110a and 120i communicate with each other through a radio air interface protocol. Certainly, communication between 110a and 120i may be alternatively performed based on an interface protocol between network devices. In this case, for 110a, 120i is also a network device. Therefore, the network device and the terminal device may be collectively referred to as communication apparatuses. 110a and 110b in FIG. 3 may be referred to as communication apparatuses with functions of a network device, and 120a to 120j in FIG. 3 may be referred to as communication apparatus with functions of a terminal device.

In this embodiment of this application, a function of the network device may be alternatively performed by a module (for example, a chip) in the network device, or may be performed by a control subsystem including the function of the network device. The control subsystem including the function of the network device may be a control center in the foregoing application scenarios such as a smart grid, industrial control, smart transportation, and a smart city. The function of the terminal device may alternatively be performed by a module (for example, a chip or a modem) in the terminal device, or may be performed by an apparatus including a function of the terminal device. The following description uses an example in which functions of a terminal device are performed by a terminal and functions of a network device are performed by a base station.

In sensing-assisted communication, using environment information obtained through sensing to improve spectral efficiency or to build more robust, resilient, and easily recoverable networks has become a major topic. Important aspects include sensing-assisted channel prediction and sensing-assisted positioning, where environment information obtained through sensing is used to predict states of radio frequency channels for communication, positioning, and the like. A radio frequency channel state may be predicted based on the obtained environment information, and the predicted radio frequency channel state may be referred to as a radio frequency channel mapping map, radio frequency channel mapping data, radio frequency data, or the like.

However, radio frequency channel mapping data may contain errors. Such errors may arise from differences between the environment information obtained through sensing and the actual physical or electromagnetic environment, or form differences between a model and a real propagation manner when the radio frequency channel mapping data is generated based on an obtained environment reconstruction result, or from losses introduced when the radio frequency channel mapping data is compressed to reduce communication pressure, and subsequently decompressed. Therefore, the accuracy of radio frequency channel mapping data affects the performance of services such as sensing-assisted channel prediction and sensing-assisted positioning.

In view of this, an embodiment of this application provides a method for evaluating radio frequency data. In the method, a first communication apparatus receives a quality measurement request, and sends, based on the quality measurement request, one or more of scatterer quality, radio frequency channel quality, and radio frequency channel mapping data application quality. The scatterer quality represents accuracy of a location of a scatterer included in first radio frequency channel mapping data, the radio frequency channel quality represents a deviation between a channel state measurement value and a predicted channel state value included in the first radio frequency channel mapping data, and the radio frequency channel mapping data application quality represents usage quality of the first radio frequency channel mapping data. According to the solution, the first communication apparatus may determine, based on the quality measurement request, one or more of the scatterer quality, the radio frequency channel quality, and the radio frequency channel mapping data application quality, to evaluate whether radio frequency channel mapping data can be applied to sensing-assisted communication such as sensing-assisted channel prediction and sensing-assisted positioning, to improve performance of sensing-assisted communication.

To facilitate understanding of the technical solutions provided in embodiments of this application, the following describes a method for obtaining radio frequency channel mapping data in embodiments of this application.

In a communication system, environment information is obtained by using a wireless sensing technology to assist channel prediction, positioning, beamforming, and the like, thereby improving quality of communication services. A process of performing prediction by using the wireless sensing technology to form a radio frequency channel mapping map is referred to as radio frequency mapping (radio frequency mapping, RF mapping). A map obtained through RF mapping is referred to as a radio frequency channel map. Data corresponding to the radio frequency channel map is referred to as radio frequency channel mapping data.

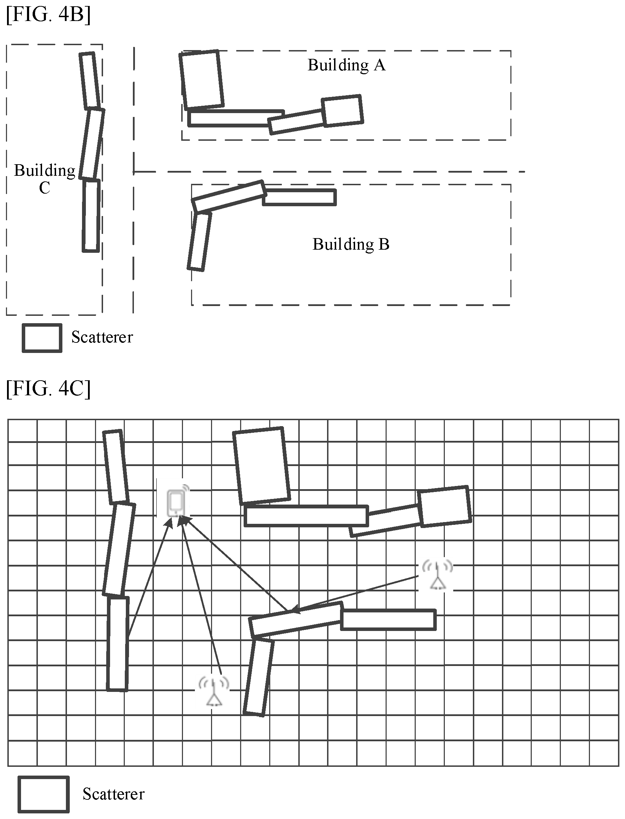

FIG. 4A shows a physical environment map. In FIG. 4A, a dashed line may represent a road. In embodiments of this application, radio frequency channel mapping data of a physical environment shown in FIG. 4A may be obtained. In the physical environment, there may be a plurality of sensing and communication nodes, such as a base station, a terminal, a receiving point (transmission and receiving point, TRP), or CPE. The sensing and communication node may emit an electromagnetic wave, a radar signal, or the like to obtain an environment reconstruction result, as shown in FIG. 4B. For example, the sensing and communication node may emit an electromagnetic wave or a radar signal, and receive an echo signal, to obtain scatterer information in a physical environment. In a possible case, the sensing and communication nodes may exchange the obtained scatterer information with each other, to obtain an environment reconstruction result with a higher precision in a larger range, as shown in FIG. 4B. Any one of the plurality of sensing and communication nodes may divide the physical environment map into a plurality of regions, and use each region as a location. For ease of description, any one of the foregoing sensing and communication nodes is referred to as a target sensing and communication node. For example, the target sensing and communication node may divide the physical environment map into a plurality of rectangular regions or referred to as grids, as shown in FIG. 4C. For another example, the target sensing and communication node may divide the physical environment map into different circular regions (not shown in the figure). For another example, the target sensing and communication node may divide the physical environment map into different hexagonal regions, which are also referred to as cellular regions (not shown in the figure). This is not specifically limited in this application. It may be understood that when the target sensing and communication node divides the physical environment map into the plurality of regions, a resolution of the regions may be predefined or preconfigured in a protocol. For example, the physical environment map may be divided into a plurality of regions at a resolution of, for example, every 5 m or 10 m. This is not specifically limited in this application.

This specification is described by using an example in which the target sensing and communication node divides the physical environment map into the plurality of grids.

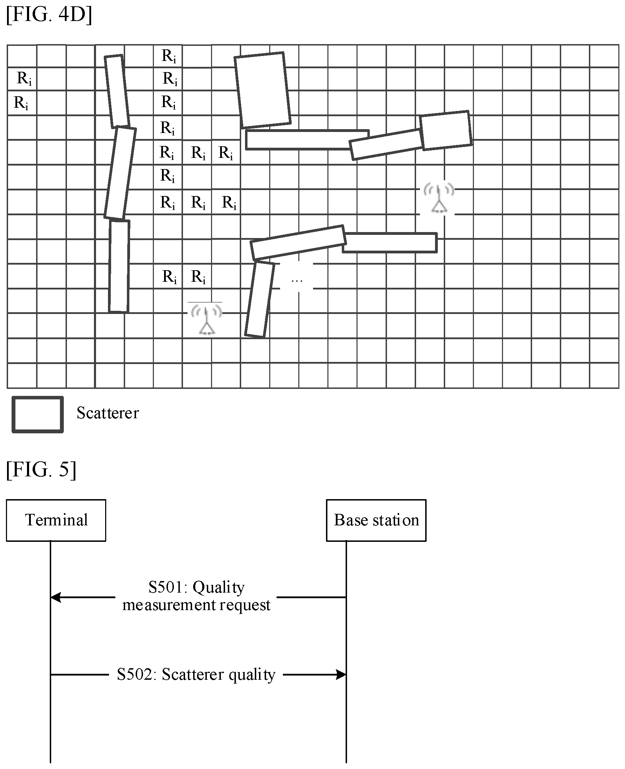

The target sensing and communication node may assume that there is one terminal at each location, and simulate a transmission path from a base station to the terminal at each location, as shown in FIG. 4C. It may be understood that the transmission path may include a direct transmission path from the base station to the terminal, or may include a transmission path that reaches the terminal through reflection of a scatterer. For example, the target sensing and communication node may obtain, by using a mirror line of sight tracking algorithm, the transmission path from the base station to the terminal at each location. The target sensing and communication node may obtain, through calculation by using the simulated transmission path, a predicted channel state value at each location, as shown in FIG. 4D. For example, the target sensing and communication node may calculate, by using a ray tracking tool, an electromagnetic calculation tool, or a simple simulation tool based on mirror reflection, the predicted channel state value of the transmission path from the base station through an environment to the terminal at each location. In addition, the target sensing and communication node may obtain information about a scatterer associated with each location, that is, information about a scatterer through which the base station reaches the terminal at each location. In this way, the radio frequency channel mapping data can be obtained.

It should be noted that the foregoing manner of obtaining the radio frequency channel mapping data is merely shown as an example, and does not constitute a limitation on the method of obtaining the radio frequency channel mapping data.

In a possible case, the radio frequency channel mapping data in embodiments of this application may include location information of each location, a predicted channel state value at each location, and the information about the scatterer associated with each location. The location information may be indicated by using a relative location, for example, a distance or an angle relative to a base station, or may be indicated by using an absolute location, for example, longitude and latitude information. Alternatively, the location information may be indicated by using a grid number.

Optionally, if the location information is indicated by using the grid number, the radio frequency channel mapping data may further include grid setting information, where the grid setting information may indicate a start location of a grid and/or a grid resolution. The start location of the grid may indicate a start location for grid division, and may be indicated by using a relative location or an absolute location. The grid resolution may indicate a scale used during grid division. It may be understood that the grid resolution may not be indicated, and a default resolution is used.

The plurality of sensing and communication nodes in the foregoing physical environment may include a base station. In a possible scenario, a processing operation of the base station may be performed by a CU, and a transceiver operation of the base station may be performed by a DU or an RU. For example, the CU may generate an electromagnetic wave used for sensing, and the CU may send the electromagnetic wave to the DU. The DU may send the electromagnetic wave; or the DU may send the electromagnetic wave to the RU, and the RU sends the electromagnetic wave. Similarly, the DU may receive an electromagnetic wave, and send the electromagnetic wave to the CU. The CU determines scatterer information or scatterer group information, to determine an environment reconstruction result. Optionally, the RU may receive an electromagnetic wave, and send the electromagnetic wave to the DU.

In another possible scenario, a processing operation of a base station may be performed by a CU-CP, and a transceiver operation of the base station may be performed by a DU or an RU. For example, the CU-CP may generate an electromagnetic wave used for sensing, and the CU-CP may send the electromagnetic wave to the DU. The DU may send the electromagnetic wave; or the DU may send the electromagnetic wave to the RU, and the RU sends the electromagnetic wave. Similarly, the DU may receive an electromagnetic wave, and send the electromagnetic wave to the CU-CP. The CU-CP determines scatterer information or scatterer group information, to determine an environment reconstruction result. Optionally, the RU may receive an electromagnetic wave, and send the electromagnetic wave to the DU.

Similarly, the target sensing and communication node may be a base station, a terminal, or a TRP. If the target sensing and communication node is a base station, in a possible scenario, a processing operation of the base station may be performed by a CU, and a transceiver operation of the base station may be performed by a DU or an RU. For example, the CU may divide a physical environment map into a plurality of regions, use each region as a location, and determine radio frequency channel mapping data at each location. The CU may send the radio frequency channel mapping data to the DU, and the DU may send the radio frequency channel mapping data to a terminal or a core network. Optionally, the DU may send the radio frequency channel mapping data to the RU, and the RU sends the radio frequency channel mapping data to the terminal or the core network.

In another possible scenario, a processing operation of a base station may be performed by a CU-CP, and a transceiver operation of the base station may be performed by a DU or an RU. For example, the CU-CP may divide a physical environment map into a plurality of regions, use each region as a location, and determine radio frequency channel mapping data at each location. The CU-CP may send the radio frequency channel mapping data to the DU, and the DU may send the radio frequency channel mapping data to a terminal or a core network. Optionally, the DU may send the radio frequency channel mapping data to the RU, and the RU sends the radio frequency channel mapping data to the terminal or the core network.

In an O-RAN scenario, an operation performed by the CU may be performed by an O-CU, an operation performed by the DU may be performed by an O-DU, an operation performed by the RU may be performed by an O-RU, and an operation performed by the CU-CP may be performed by an O-CU-CP.

In this application, the radio frequency channel map may indicate information in the following two aspects:

In one aspect, the radio frequency channel map corresponds to a specific geographical region, and indicates geographical locations and region sizes of a plurality of regions obtained by dividing the geographical region.

The geographical region may be a region in a specific range in a real physical world. For example, the geographical region may be represented by using a longitude, a latitude, and a height. For example, an outdoor scenario of 100 m×100 m is defined with a reference to a start point denoted as (x_0, y_0, z_0).

The plurality of regions may be regions obtained by dividing the geographical region in a specific manner. For example, the 100 m×100 m geographical region is divided in a manner of 1 m×1 m, to obtain 100×100 regions. Each region is 1 m×1 m.

It is easily understood that in this application, the region (namely, the region obtained by dividing the geographical region in a specific manner) related to the radio frequency channel map may have at least one of the following attributes: a shape, a size, an area, a geographical location, and the like.

In this application, shapes, contours, sizes, radiuses, and areas of different regions are the same. Different regions have different geographical locations, and different regions do not overlap.

In a possible implementation, the shape of the region may be a square or another shape, for example, a rectangle, a trapezoid, or a triangle. Alternatively, the shape of the region may be an irregular shape. This is not limited.

For example, the shape of the region may be defined in a protocol, or may be defined by a network device. Regions defined by different network devices may have same or different shapes. A same network device may also define shapes of a plurality of regions. Similarly, the size, the radius, and the area of the region may also be defined in a protocol, or may be defined by the network device. Regions defined by different network devices may have same or different sizes, radiuses, and areas. A same network device may also define sizes of a plurality of regions, radiuses of a plurality of regions, or areas of a plurality of regions.

In a possible implementation, the plurality of regions may be indexed (for example, numbered), to identify different regions.

In a possible case, the radio frequency channel map includes a plurality of grids, and the plurality of grids are in one-to-one correspondence with the plurality of regions. It is easily understood that, in this application, the grid related to the radio frequency channel map may have at least one of the following attributes: a shape, a size, an area, and the like. The shape of the grid may be consistent with a shape of a region corresponding to the grid. There is a specific ratio between the size of the grid and a size of the region corresponding to the grid. There is a specific ratio between the area of the grid and an area size of the region corresponding to the grid. The size of the grid may alternatively be described in another manner, for example, resolution.

In a possible implementation, if a related result of the environment reconstruction result obtained by the sensing and communication node is inaccurate, for example, when accuracy of a location of a scatterer or a scatterer group is low, accuracy of radio frequency channel mapping data obtained based on the environment reconstruction result is also low. Therefore, in embodiments of this application, scatterer quality may be evaluated. It may be understood that the scatterer quality may represent accuracy of a location of a scatterer or a scatterer group. For ease of description, the scatterer group and the scatterer are collectively referred to as a scatterer below. It may be understood that the scatterer in the following may also be replaced with the scatterer group.

FIG. 5 shows an example flowchart of a method for evaluating scatterer quality, which may include the following operations. In the method, a first communication apparatus in the sensing and communication node may initiate scatterer quality evaluation to a second communication apparatus in the sensing and communication node. FIG. 5, uses an example in which the first communication apparatus is a base station and the second communication apparatus is a terminal.

S501: The base station sends a quality measurement request to the terminal.

Correspondingly, the terminal receives the quality measurement request from the base station.

For example, the base station may send a scatterer quality measurement request to the terminal. In the embodiment shown in FIG. 5, the base station may obtain an environment reconstruction result based on the manners described in FIG. 4A and FIG. 4B.

In a possible case, the environment reconstruction result or radio frequency channel mapping data may be stored in the base station or a session management function (session management function, SMF) or a location management function (location management function, LMF) in a core network device. If the environment reconstruction result or the radio frequency channel mapping data is stored in the LMF or the SMF, the SMF or the LMF may initiate scatterer quality evaluation. For example, the SMF or the LMF may send the quality measurement request, for example, the scatterer quality measurement request, to the base station, and the base station may perform S501.

It should be noted that the session management function network element and the location management function network element in embodiments of this application may be a network element having a session management function and a network element having a location management function respectively. For ease of description, the session management function network element and the location management function network element are respectively referred to as the SMF and the LMF in subsequent descriptions of this application. It should be noted that, in future communication, the session management function network element and the location management function network element may still be referred to as the SMF and the LMF, or may have other names. This is not limited in this application.

In a possible implementation, the base station may determine a terminal associated with a scatterer, and send the quality measurement request to the associated terminal. For example, assuming that the base station intends to evaluate quality {*Q*_{*s*1,}*Q*_{*s*2,} ... , *Qₛₙ*} of scatterers {*P*₁, *P*₂, ... , *Pₙ*} associated with a first location, the base station may determine a terminal at the first location, and send the quality measurement request to the terminal at the first location.

Optionally, the quality measurement request may include information about the scatterer, for example, identification information of the scatterer and/or an estimated location of the scatterer. It may be understood that the estimated location of the scatterer may be understood as a location of the scatterer obtained by the sensing and communication node based on the echo signal in FIG. 4A.

S502: The terminal sends the scatterer quality to the base station.

Correspondingly, the base station receives the scatterer quality from the terminal.

In a possible case, the terminal may obtain a true value of a location of the scatterer. For example, the terminal may obtain, based on a map of a real physical environment, information about the location of the scatterer in the map, and consider the information as the true value of the location of the scatterer, that is, a real location. The terminal may determine the scatterer quality based on the true value of the location of the scatterer and the estimated location of the scatterer. For example, the terminal may calculate a difference, a variance, a square difference, or the like between the true value of the location of the scatterer and the estimated location of the scatterer. The terminal may consider the obtained difference, variance, or square difference as the scatterer quality, or the terminal may determine the scatterer quality corresponding to the difference, variance, or square difference, in other words, the terminal may quantize the scatterer quality based on the difference, variance, or square difference.

In another possible case, the terminal may obtain a location of an anchor. For example, the terminal may store a location of a specific anchor, for example, a location of a building, a location of a street lamp, or a location of a street, where the building, the street lamp, or the street may be considered as an anchor. The terminal may estimate the location of the scatterer based on the location of the anchor. The terminal may determine the scatterer quality based on the estimated location of the scatterer and the location of the scatterer estimated by using the location of the anchor. For details, refer to the foregoing related descriptions. Details are not described herein again.

In still another possible case, the terminal may obtain a location of the scatterer obtained through long-term cumulative measurement. For example, the terminal may obtain locations of the scatterer obtained through measurement within a period of time, for example, a year, a month, or a week. The terminal may calculate an average value of these locations. The terminal may determine the scatterer quality based on the average value and the estimated location of the scatterer. For details, refer to the foregoing related descriptions. Details are not described herein again.

Optionally, in S502, the terminal may send, to the base station, the foregoing obtained true value of the location of the scatterer, the location of the anchor, or the average value of the locations of the scatterer obtained through long-term cumulative measurement. The base station, the LMF, or the SMF may determine the scatterer quality based on the foregoing estimated location of the scatterer and the following from the terminal: the true value of the location of the scatterer, the location of the anchor, or the location of the scatterer obtained through long-term cumulative measurement.

It should be noted that, quality of a plurality of scatterers may be obtained by using S501 and S502, for example, the quality {*Q*_{*s*1,} *Q*_{*s*2,} ... , *Qₛₙ*} of the scatterers {*P*₁, *P*₂, ... , *Pₙ*} associated with the first location. The base station may determine scatterer quality at the first location based on the quality {*Q*_{*s*1,} *Q*_{*s*2,} ... , *Qₛₙ*} of the scatterers {*P*₁, *P*₂, ... , *Pₙ*}. For example, the base station may determine an average value of {*Q*_{*s*1,}*Q*_{*s*2,} ... , *Qₛₙ*}, and use the average value as the scatterer quality at the first location. The scatterer quality *Qₛ* at the first location may meet the following formula (1): ${Q}_{s} = \frac{{\sum }_{i = 1}^{n} {Q}_{si}}{n}$ Formula (1)

n represents a quantity of scatterers associated with the first location, and *Qₛᵢ* represents quality of an i^{th} scatterer in the n scatterers.

In a possible implementation, if the scatterer quality at the first location does not meet a first requirement, it may be considered that the scatterer quality at the first location is poor, or that the estimated location of the scatterer is inaccurate, and the base station may re-initiate a process of obtaining the environment reconstruction result. For example, the base station may schedule a sensing resource based on the currently obtained scatterer quality. The sensing and communication node shown in FIG. 4A emits an electromagnetic wave or a radar signal based on the scheduled sensing resource and receives an echo signal, to obtain the environment reconstruction result. In addition, the base station may continue performing S501 and S502 until the scatterer quality meets the first requirement.

It may be understood that the scatterer quality may be determined based on the difference, the variance, or the square difference, or the scatterer quality may be the difference, the variance, or the square difference. This is not specifically limited in this application. It may be considered that the scatterer quality does not meet the first requirement means that the scatterer quality is greater than or equal to a scatterer quality threshold, or the scatterer quality is less than or equal to a scatterer quality threshold.

In a possible case, if the scatterer quality is determined based on the foregoing difference, variance, or square difference, the scatterer quality threshold may be 1, 1.5, 10%, or other values. In another possible case, if the scatterer quality is the difference, the variance, or the square difference, for example, if the scatterer quality is the variance, the scatterer quality threshold may be a value like 0.1, 0.01, or 0.5. This is not specifically limited in this application.

According to the foregoing solution, as shown in FIG. 4A to FIG. 4D, the radio frequency channel mapping data is obtained based on the environment reconstruction result. If the scatterer quality meets the first requirement, it may be considered that the location of the scatterer included in the environment reconstruction result is accurate. Therefore, the radio frequency channel mapping data obtained based on the environment reconstruction result is also accurate, accuracy of the radio frequency channel mapping data can be improved, and performance of sensing-assisted communication based on the radio frequency channel mapping data can be improved. If the scatterer quality does not meet the first requirement, it may be considered that the scatterer quality does not meet an expectation. In this case, the radio frequency channel mapping data obtained based on the environment reconstruction result is not accurate. Therefore, RF mapping may be performed without performing radio frequency channel quality evaluation and sending the radio frequency channel quality, to reduce system overheads.

Optionally, when the base station re-initiates obtaining of the environment reconstruction result, the base station may adjust the sensing resource to improve the accuracy of the environment reconstruction result, for example, the base station may adjust one or more of a transmission reception point (transmission reception point, TRP), a quantity of antenna streams, a time domain resource used for sensing, a frequency domain resource bandwidth, and space.

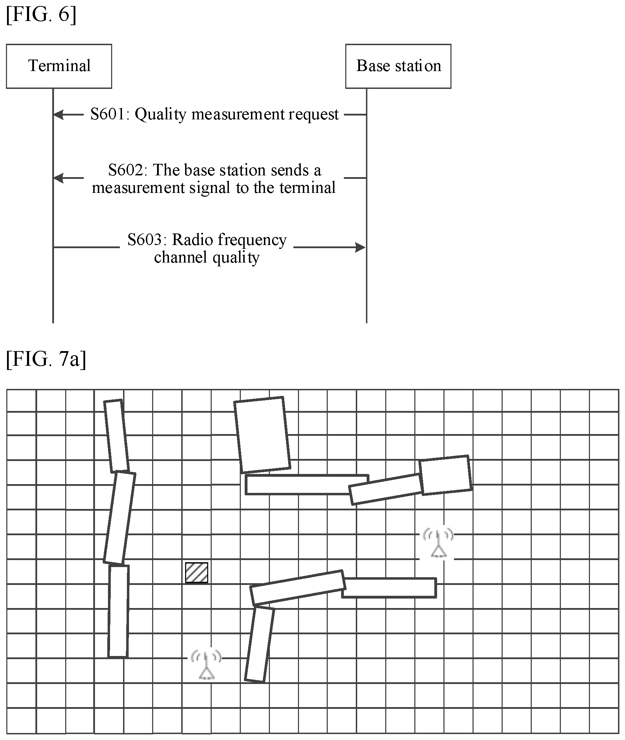

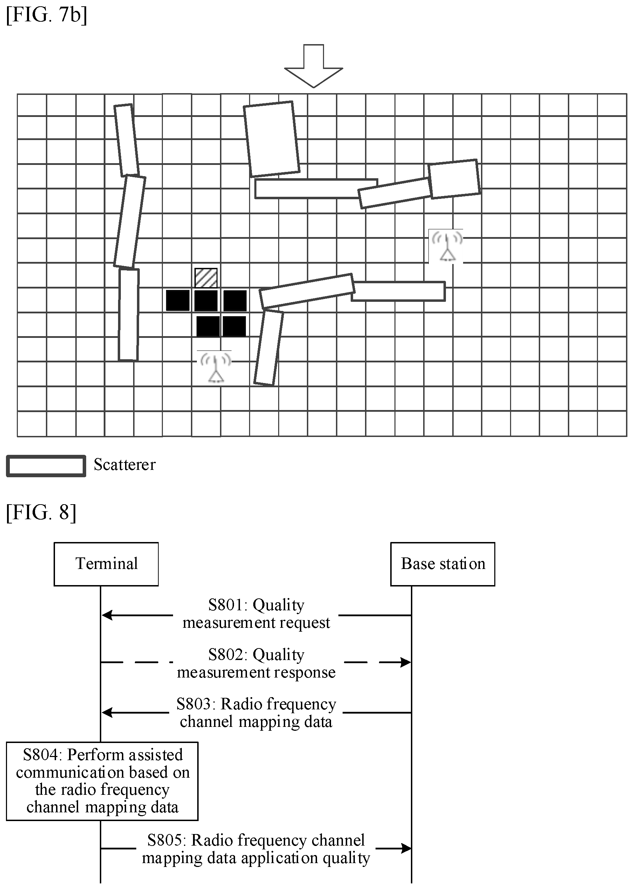

In this embodiment of this application, if the scatterer quality at the first location meets the first requirement, it indicates that the scatterer quality meets the expectation. In this case, the base station may initiate radio frequency channel quality evaluation or radio frequency channel mapping data application quality evaluation. It may be understood that the radio frequency channel quality may represent a deviation between a channel state measurement value and a predicted channel state value included in the radio frequency channel mapping data, and the radio frequency channel mapping data application quality represents usage quality of the radio frequency channel mapping data. The following separately describes, by using FIG. 6 and FIG. 7a and FIG. 7b, a method for evaluating radio frequency channel quality and a method for evaluating radio frequency channel mapping data application quality.

FIG. 6 is an example flowchart of the method for evaluating radio frequency channel quality according to an embodiment of this application. The method may include the following operations. In the method, a first communication apparatus in the sensing and communication node may initiate radio frequency channel quality evaluation to a second communication apparatus in the sensing and communication node. FIG. 6 uses an example in which the first communication apparatus is a base station and the second communication apparatus is a terminal.

S601: The base station sends a quality measurement request to the terminal.

Correspondingly, the terminal receives the quality measurement request from the base station. For example, the base station may send a radio frequency channel quality measurement request to the terminal.

Optionally, the quality measurement request in S601 may include radio frequency channel mapping data, for example, the radio frequency channel mapping data obtained by using the procedures shown in FIG. 4A to FIG. 4D. Alternatively, the radio frequency channel mapping data may have been previously sent to the terminal and stored in the terminal. In S601, the radio frequency channel mapping data may be stored in the base station or an LMF or an SMF in a core network device, and the base station may obtain the radio frequency channel mapping data and send the radio frequency channel mapping data to the terminal.

In a possible case, the base station may send related data of K locations to the terminal, for example, location information of the K locations, predicted channel state values of the K locations, and information about scatterers associated with the K locations. The K locations include a first location at which the terminal is located. K is an integer greater than or equal to 1. For example, the base station may locate the terminal, or the terminal may send location information to the base station. In this way, the base station may determine the location of the terminal, and send the related data of the K locations to the terminal. Optionally, the radio frequency channel mapping data sent by the base station to the terminal may further include grid setting information.

In an example, the radio frequency channel mapping data in this embodiment of this application may further include reference radio frequency channel quality. It may be understood that the reference sensing quality may be an initial value, that is, reference radio frequency channel quality determined based on a predicted channel state value, or the reference radio frequency channel quality may be radio frequency channel quality that has been updated according to the embodiment shown in FIG. 6. The radio frequency channel mapping data sent by the base station to the terminal may further include reference radio frequency channel quality at the foregoing K locations.

Optionally, to evaluate the radio frequency channel quality, the radio frequency channel mapping data sent by the base station to the terminal may further include configuration information of a measurement signal for evaluating the radio frequency channel quality, for example, may include one or more of a transmit and receive antenna port (port) number, precoding information, a subcarrier configuration, and the like. It may be understood that, the configuration information of the measurement signal may be configuration information, such as the transmit and receive antenna port number, the precoding information, and the subcarrier configuration, used by the sensing and communication node for sending of the electromagnetic wave when the environment reconstruction result is obtained, as shown in FIG. 4A and FIG. 4B. This is to reduce an error caused by different precoding information, subcarrier configurations, and transmit and receive antenna port numbers, to improve accuracy of the radio frequency channel quality.

In a possible implementation, S601 may be performed after scatterer quality meets a first requirement. If the radio frequency channel mapping data is stored in the LMF or the SMF, the LMF or the SMF may send a quality measurement request to the base station, and the base station may perform S601.

S602: The base station sends a measurement signal to the terminal.

Correspondingly, the terminal receives the measurement signal from the base station.

For example, the measurement signal may be a downlink signal like channel state information (channel state information, CSI)-reference signal (reference signal, RS) or a positioning reference signal (positioning reference signal, PRS).

In a possible implementation, the terminal may obtain configuration information of the measurement signal. For example, the terminal may receive the configuration information of the measurement signal from the base station. For example, the base station may send a system message, and the terminal may receive the system message sent by the base station. The system message may include the configuration information of the measurement signal.

It should be noted that, when sending the measurement signal, the base station may send the measurement signal based on the configuration information of the measurement signal, for example, may send the measurement signal by using a transmit and receive antenna port number, precoding information, and a subcarrier configuration that are indicated in the configuration information of the measurement signal. Similarly, when receiving the measurement signal, the terminal may receive the measurement signal based on the configuration information of the measurement signal, for example, may receive the measurement signal by using the transmit and receive antenna port number, the precoding information, and the subcarrier configuration that are indicated in the configuration information of the measurement signal.

The terminal may measure the measurement signal to obtain a channel state measurement value. For example, the terminal may measure the measurement signal, to obtain channel state information (channel state information, CSI), a power delay profile (power delay profile, PDP), a call reference identifier (call reference identifier, CRI), a channel impulse response (channel impulse response, CIR), a rank indicator (rank indicator, RI), a channel quality indicator (channel quality indicator, CQI), a precoding matrix indicator (precoding matrix indicator, PMI), a layer indicator (layer indicator, LI), or the like of the measurement signal. This is not specifically limited in this application. The terminal may determine radio frequency channel quality at the first location based on the channel state measurement value and a predicted channel state value at the first location. For example, the terminal determines a correlation between the channel state measurement value and the predicted channel state value, to determine the radio frequency channel quality, which is described below.

For example, the predicted channel state value that is at the first location and that is included in the radio frequency channel mapping data includes Rᵢ elements, indicating a multipath component predicted at the first location (xᵢ, y_{i,} zᵢ) according to an environment, and represented by using a formula (2): ${R}_{i} = \left\{\left({Power}_{1}, {Delay}_{1}, {AOX}_{1}\right),\left({Power}_{2}, {Delay}_{2}, {AOX}_{2}\right),…,\left({Power}_{k}, {Delay}_{k}, {AOX}_{k}\right)\right\}$ Formula (2)

The terminal may measure the measurement signal, and may also determine a measurement result, which is represented by using a formula (3): ${R}_{ue} = \left\{\left({\hat{Power}}_{1}, {\hat{Delay}}_{1}, {\hat{AOX}}_{1}\right),\left({\hat{Power}}_{2}, {\hat{Delay}}_{2}, {\hat{AOX}}_{2}\right),…,\left({\hat{Power}}_{k}, {\hat{Delay}}_{k}, {\hat{AOX}}_{k}\right)\right\}$ Formula (3)

The first location at which the terminal is located may be represented by **(*xᵤₑ*, *y_{ue,} zᵤₑ*).** Optionally, when a positioning capability or positioning precision of the terminal is good, for example, when positioning quality exceeds a preset threshold, it indicates that a global positioning system (global positioning system, GPS) or a line of sight (line of sight, LOS) condition is well evaluated. Therefore, **(*xᵤₑ*, *y_{ue,} zᵤₑ*)** and corresponding Rᵤₑ may be input in a record stack to represent true value information in reality.

It should be noted that the terminal may determine a correlation between Rᵢ and Rᵤₑ by using algorithms such as a Euclidean distance, a Manhattan distance, cosine similarity, Pearson correlation, and Jaccard (Jaccard) similarity. The Euclidean distance is used as an example for description.

The terminal may determine the correlation ***Sᵢ* = *f*(*Rᵢ, Rᵤₑ*)** between ***Rᵢ*** and ***Rᵤₑ*** as the radio frequency channel quality, which is represented by using a formula (4): ${Q}_{R} = {\sum }_{k = 1}^{K} \left(\left|{\hat{Delay}}_{k}-{Delay}_{k}\right|+\left|{\hat{AOX}}_{k}-{AOX}_{k}\right|\right) \times {Power}_{i}$ Formula (4)

Q_{R} may be used as the radio frequency channel quality.

S603: The terminal sends the radio frequency channel quality to the base station.

Correspondingly, the base station receives the radio frequency channel quality from the terminal.

In a possible case, the terminal may send the channel state measurement value to the base station in S603. The base station, the LMF, or the SMF may determine the radio frequency channel quality based on the channel state measurement value and the predicted channel state value. For details, refer to the methods described by the formula (2) to the formula (4). Details are not described again.

In a possible implementation, if the radio frequency channel quality does not meet a second requirement, for example, if the radio frequency channel quality is greater than or equal to a radio frequency channel quality threshold, it indicates that the predicted channel state value does not meet an expectation, that is, the predicted channel state value is inaccurate. In this case, the base station may re-generate radio frequency channel mapping data, and re-initiate a radio frequency channel quality evaluation process until the radio frequency channel quality meets the second requirement. Optionally, if the radio frequency channel quality does not meet the second requirement, when re-generating the radio frequency channel mapping data, the base station may adjust an RF mapping data generation parameter, to improve accuracy of the radio frequency channel mapping data.

It may be understood that the radio frequency channel quality threshold may be set based on an empirical value, for example, may be set to 10 dBM. This is not specifically limited in this application.

In this embodiment of this application, if the radio frequency channel quality meets the second requirement, for example, if the radio frequency channel quality is less than or equal to the radio frequency channel quality threshold, it indicates that the radio frequency channel quality meets the expectation. In this case, the base station may update reference radio frequency channel quality at another location associated with the scatterer associated with the first location, for example, a location other than the first location, to the radio frequency channel quality that meets the second requirement. In the following, the another location associated with the scatterer associated with the first location is referred to as a second location.

FIG. 7a and FIG. 7b are a diagram of updating sensing quality. As shown in FIG. 7a and FIG. 7b, a terminal may be located at a first location (a shadow rectangle shown in FIG. 7a), and radio frequency channel quality at the first location may be determined according to the embodiment shown in FIG. 6. The terminal or a base station may determine, based on radio frequency channel mapping data, a second location (a black rectangle shown in FIG. 7b) associated with a scatterer associated with the first location. The terminal or the base station may also update reference radio frequency channel quality at the second location to the radio frequency channel quality, in other words, the radio frequency channel quality may be uniformly updated by sharing a location of the scatterer associated with the first location.

In a possible case, assuming that scatterers associated with the first location include a scatterer A and a scatterer B, and scatterers associated with the second location, for example, a location X, include a scatterer A, a scatterer B, and a scatterer C, a first communication apparatus and a second communication apparatus may determine a weight of each scatterer based on contributions of the scatterer A, the scatterer B, and the scatterer C to a predicted channel state value Rᵢ. In this case, radio frequency channel quality Q_{R} at the location X=quality (radio frequency channel quality) of the scatterer A*weight of the scatterer A+quality (radio frequency channel quality) of the scatterer B*weight of the scatterer B+weight of the scatterer C*quality of the scatterer C. The quality of the scatterer C may be shown in the embodiment shown in FIG. 6. A difference lies in that when the quality of the scatterer C is determined, a communication apparatus at a location associated with the scatterer C needs to perform the embodiment shown in FIG. 6.

According to the foregoing solution, if the radio frequency channel quality meets the second requirement, it may be considered that the radio frequency channel quality meets the expectation, and the radio frequency channel quality may feed back quality of a communication link between the terminal and the base station. Therefore, if the radio frequency channel quality meets the second requirement, it may be considered that quality of the communication link between the terminal and the base station meets the expectation. It can be learned from the content shown in FIG. 4A to FIG. 4D that, the communication link between the terminal and the base station may include a direct link, or may include a transmission path formed through reflection of the scatterer. Therefore, when the radio frequency channel quality meets the expectation, it indicates that a location of the scatterer is accurate. Therefore, the radio frequency channel quality at the second location associated with the scatterer may be updated based on the radio frequency channel quality, so that the radio frequency channel mapping data is used for sensing-assisted communication, to improve service performance of the radio frequency channel mapping data.

In a possible implementation, if the radio frequency channel quality meets the second requirement, it indicates that the radio frequency channel quality meets the expectation, that is, the radio frequency channel quality at the first location and the radio frequency channel quality at the second location are accurate. In this case, related data of the first location and related data of the second location, such as one or more of the following may be used for sensing-assisted communication: a predicted channel state value at the first location and a predicted channel state value at the second location, information about the scatterer associated with the first location and information about the scatterer associated with the second location, or the radio frequency channel quality at the first location and the radio frequency channel quality at the second location, and sensing-assisted communication for which the related data of the first location in the radio frequency channel mapping data is used may be enabled in a protocol. For example, the base station may send updated radio frequency channel mapping data to the terminal, for example, radio frequency channel mapping data after the reference radio frequency channel quality is updated to the radio frequency channel quality in S602. The terminal may use the related data related to the first location and the related data related to the second location in the updated radio frequency channel mapping data for sensing-assisted communication.

In another possible implementation, if the scatterer quality meets the first requirement, it indicates that the scatterer quality meets the expectation, that is, the location of the scatterer associated with the first location included in an environment reconstruction result is accurate. Therefore, related data, related to the first location, in radio frequency channel mapping data generated based on the environment reconstruction result is accurate. In this case, related data of the first location and related data of the second location, such as one or more of the following may be used for sensing-assisted communication: a predicted channel state value at the first location and a predicted channel state value at the second location, information about the scatterer associated with the first location and information about the scatterer associated with the second location, or the radio frequency channel quality at the first location and the radio frequency channel quality at the second location, and sensing-assisted communication for which the related data of the first location in the radio frequency channel mapping data is used may be enabled in a protocol. For example, the base station may send updated radio frequency channel mapping data to the terminal, for example, radio frequency channel mapping data after the reference radio frequency channel quality is updated to the radio frequency channel quality in S603. The terminal may use the related data related to the first location and the related data related to the second location in the updated radio frequency channel mapping data for sensing-assisted communication.

In still another possible implementation, if the scatterer quality meets the first requirement and the radio frequency channel quality meets the second requirement, related data of the first location and related data of the second location, such as one or more of the following may be used for sensing-assisted communication: a predicted channel state value at the first location and a predicted channel state value at the second location, information about the scatterer associated with the first location and information about the scatterer associated with the second location, or the radio frequency channel quality at the first location and the radio frequency channel quality at the second location, and sensing-assisted communication for which the related data of the first location and the related data of the second location in the radio frequency channel mapping data are used may be enabled in a protocol. For example, the base station may send updated radio frequency channel mapping data to the terminal, for example, radio frequency channel mapping data after the reference radio frequency channel quality is updated to the radio frequency channel quality in S603. The terminal may use the related data related to the first location and the related data related to the second location in the updated radio frequency channel mapping data for sensing-assisted communication.

In a possible case, the radio frequency channel mapping data that may be sent by the base station to the terminal may include related data of M locations, the M locations may include the first location and the second location, and M is an integer greater than or equal to 1. For example, the radio frequency channel mapping data sent by the base station to the terminal may include location information of the M locations, predicted channel state values at the M locations, and information about a scatterer or information about a scatterer group associated with the M locations. Optionally, the radio frequency channel mapping data sent by the base station to the terminal may further include the foregoing grid setting information, indicating a start location of a grid and/or a grid resolution. It may be understood that the M locations may be the same as or different from the foregoing K locations.

In an example, the radio frequency channel mapping data sent by the base station to the terminal may further include the radio frequency channel quality shown in FIG. 6. Optionally, the radio frequency channel mapping data sent by the base station to the terminal may further include radio frequency channel mapping data application quality, and the radio frequency channel mapping data application quality may be determined according to an embodiment shown in FIG. 8.

Optionally, the radio frequency channel mapping data sent by the base station to the terminal may further include configuration information of a measurement signal for evaluating the radio frequency channel quality, for example, may include one or more of a transmit and receive antenna port (port) number, precoding information, a subcarrier configuration, and the like.

For example, in this embodiment of this application, the radio frequency channel mapping data sent by the base station to the terminal may include content shown in the following Table 1.

**Table 1: Example of radio frequency channel mapping data**

| Configuration information of a measurement signal (Reference signal config) | Grid setting information (Grid config) | Location information (Localization grid) | Predicted channel state value (Channel state) | Information about an associated scatterer or information about an associated scatterer group (Association scatterer/scatterer group) | Scatterer quality | Radio frequency channel quality (Sensing quality) | Sensing-assisted communication quality/Radio frequency channel mapping data application quality (sensing application quality) |
|---|---|---|---|---|---|---|---|
| | {Start location (start) of a grid, resolution (grid resolution)} | (***xᵢ***, ***y***_{***i***,}***zᵢ***)/Grid number (Grid ID ***i***) | ${R}_{i} =$ $\left\{\begin{matrix}\left({Power}_{1}, {Delay}_{1}, {AOA}_{1}, {AOD}_{1}\right) , \\ \left({Power}_{2}, {Delay}_{2}, {AOA}_{2}, {AOD}_{2}\right) , \\ … , \\ \left({Power}_{k}, {Delay}_{k}, {AOA}_{k}, {AOD}_{k}\right)\end{matrix}\right\}$ | Scatterer identifier (Scatterer ID) $\left\{\begin{matrix}{P}_{1} , {P}_{2} , … , \\ {P}_{n}\end{matrix}\right\}$ | {*Q*_{*s*1,} *Q*_{*s*2}, ... , *Qₛₙ*} | Q_{R} | Q_{A} |

As shown in Table 1, the radio frequency channel mapping data sent by the base station to the terminal may include one or more of the configuration information, the grid setting information, the location information, the predicted channel state value, the associated scatterer or the associated scatterer group, and the associated sensing quality of the measurement signal. The following provides descriptions one by one.
1. The configuration information of the measurement signal may include one or more of a transmit and receive antenna port (port) number, precoding information, and a subcarrier configuration.
   It may be understood that, the configuration information of the measurement signal may be configuration information, such as the transmit and receive antenna port number, the precoding information, and the subcarrier configuration, used by the sensing and communication node for sending of an electromagnetic wave when the environment reconstruction result is obtained.
2. The location information indicates a geographical location. The location information may be indicated by using a relative location, for example, a distance or an angle relative to a base station, or may be indicated by using an absolute location, for example, longitude and latitude information. Alternatively, the location information may be indicated by using a grid number. In Table 1, the subscript i may be understood as the grid number.
3. The grid setting information indicates the start location of the grid and/or the grid resolution.
   The start location of the grid may indicate a start location for grid division, and may be indicated by using a relative location or an absolute location. The grid resolution may indicate a scale used during grid division. It may be understood that the grid resolution may not be indicated, and a default resolution is used.
4. The predicted channel state value may be indicated by using multipath information, for example, indicated by using a power delay profile (power delay profile, PDP) or a channel impulse response (channel impulse response, CIR). The predicted channel state value is obtained by calculating a transmission path from the base station to the terminal at each location by the target sensing and communication node in FIG. 4A to FIG. 4D.
5. The information about the associated scatterer or the information about the associated scatterer group is information about a scatterer or a scatterer group associated with a transmission path when a predicted channel state value of a grid is estimated. In a possible case, the information about the scatterer may include an identifier of the scatterer and/or location information of the scatterer. The location information of the scatterer may be indicated by using coordinate information of a grid, or may be indicated by using an absolute location or a relative location. Optionally, the information about the scatterer may further include information about obtaining time, for example, may be a timestamp, representing that the sensing and communication node in FIG. 4B senses the scatterer at the timestamp.
6. The radio frequency channel quality, that is, radio frequency channel quality corresponding to a grid, which is equivalent to quality of service of sensing accuracy. Optionally, the radio frequency channel quality corresponding to the grid may have an initial value. The initial value may be set to a preset lowest value, or may be determined based on information about time of obtaining the information about the scatterer or the information about the scatterer group. For example, a larger time difference between the information about the obtaining time and current time may represent earlier time for evaluating the radio frequency channel quality, consequently, the radio frequency channel quality may become inaccurate, and the initial value is smaller; and a smaller time difference between the information about the obtaining time and the current time may represent later time for evaluating the radio frequency channel quality, therefore, the radio frequency channel quality may not change greatly, and the initial value is larger. The radio frequency channel quality may be updated by using the measurement process shown in FIG. 6.
7. The radio frequency channel mapping data application quality, also referred to as sensing-assisted communication quality, refers to quality feedback of communication in a corresponding region, for example, the first location, after current radio frequency channel mapping data, for example, the radio frequency channel mapping data shown in Table 1 is used for sensing-assisted communication. Optionally, the radio frequency channel mapping data application quality may be updated by using a measurement process of the radio frequency channel mapping data application quality shown in FIG. 8, which is described below.

FIG. 8 is an example flowchart of a method for evaluating radio frequency channel mapping data application quality according to an embodiment of this application. The method may include the following operations. In the method, a first communication apparatus in the sensing and communication node may initiate radio frequency channel quality evaluation to a second communication apparatus in the sensing and communication node. FIG. 8 uses an example in which the first communication apparatus is a base station and the second communication apparatus is a terminal.

S801: The base station sends a quality measurement request to the terminal.

Correspondingly, the terminal receives the quality measurement request from the base station.

In a possible case, the quality measurement request may be a radio frequency channel mapping data application request, which is used to request or indicate the terminal to perform sensing-assisted communication based on the radio frequency channel mapping data, for example, enable the terminal to perform positioning, beamforming, communication, or the like based on the radio frequency channel mapping data.

In a possible implementation, S801 may be performed when radio frequency channel quality meets a second requirement. If the radio frequency channel mapping data is stored in an LMF or an SMF, the LMF or the SMF may send the quality measurement request to the base station when the radio frequency channel quality meets the second requirement, and the base station may perform S801.

Optionally, the embodiment shown in FIG. 8 may further include the following operation S802.

S802: The terminal sends a quality measurement response to the base station.

Correspondingly, the base station receives the quality measurement response from the terminal.

In a possible case, the quality measurement response may be a radio frequency channel mapping data application response, indicating that the terminal may perform sensing-assisted communication based on the radio frequency channel mapping data, or indicates the base station to send the radio frequency channel mapping data. Optionally, the base station may send the quality measurement response to the LMF or the SMF.

S803: The base station sends the radio frequency channel mapping data to the terminal.

Correspondingly, the terminal receives the radio frequency channel mapping data from the base station.

For example, the base station may send the radio frequency channel mapping data shown in Table 1 to the terminal. The radio frequency channel mapping data may include related data of M locations, and the M locations may include the first location and the second location. In a possible case, if the radio frequency channel mapping data is stored in the LMF or the SMF, the LMF or the SMF may send the radio frequency channel mapping data to the base station, and the base station may perform S803.

S804: The terminal performs sensing-assisted communication based on the radio frequency channel mapping data.

For example, the terminal may perform beamforming, positioning, communication, or the like based on the radio frequency channel mapping data.

S805: The terminal sends the radio frequency channel mapping data application quality to the base station.

Correspondingly, the base station receives the radio frequency channel mapping data application quality from the terminal.

The terminal may determine the radio frequency channel mapping data application quality based on quality of service (quality of service, QoS) in a communication process, an acknowledgment (acknowledgement, ACK) or a negative-acknowledgment (non-acknowledgement, NACK) in the communication process, and a positioning result as confidence. For example,

In a possible implementation, if the radio frequency channel mapping data application quality does not meet a third requirement, it may be considered that the radio frequency channel mapping data application quality does not meet an expectation. This problem may be caused by a fact that to reduce transmission pressure, the base station compresses the radio frequency channel mapping data and sends the compressed radio frequency channel mapping data to the terminal, and then the terminal decompresses the radio frequency channel mapping data, or may be caused by an inaccurate parameter, for example, a communication link, selected when the base station generates the radio frequency channel mapping data. Therefore, the base station may adjust a compression manner of the radio frequency channel mapping data or a parameter, for example, the communication link, selected when the radio frequency channel mapping data is generated, and send adjusted radio frequency channel mapping data to the terminal. The terminal may perform sensing-assisted communication based on the adjusted radio frequency channel mapping data. If the radio frequency channel mapping data application quality meets a first requirement, it may be considered that accuracy of the radio frequency channel mapping data is high, and the terminal may continue performing sensing-assisted communication based on the radio frequency channel mapping data.

It may be understood that the radio frequency channel mapping data application quality may be determined based on a quantity of ACKs, a quantity of NACKs, the positioning result, or the QoS, or the radio frequency channel mapping data application quality may be a quantity of ACKs, a quantity of NACKs, the positioning result, or the QoS. This is not specifically limited in this application. It may be considered that the radio frequency channel mapping data application quality does not meet the third requirement means that the radio frequency channel mapping data application quality is greater than or equal to a radio frequency channel mapping data application quality threshold, or the radio frequency channel mapping data application quality is less than or equal to a radio frequency channel mapping data application quality threshold.

In a possible case, if the radio frequency channel mapping data application quality is determined based on the quantity of ACKs, the quantity of NACKs, the positioning result, or the QoS, the radio frequency channel mapping data application quality may be a value such as 1 or 15%. In another possible case, if the radio frequency channel mapping data application quality is the quantity of ACKs, the quantity of NACKs, the positioning result, or the QOS, for example, the radio frequency channel mapping data application quality is the quantity of NACKs, the radio frequency channel mapping data application quality threshold may be a value like 1, 2, or 3. This is not specifically limited in this application.

According to the foregoing solution, if the radio frequency channel mapping data application quality does not meet the third requirement, it may be considered that the compression manner of the radio frequency channel mapping data is incorrect, or the parameter selected when the radio frequency channel mapping data is generated is inaccurate. In this case, performance of performing sensing-assisted communication by the terminal based on the radio frequency channel mapping data is low. Therefore, the base station may adjust the compression manner of the radio frequency channel mapping data or the parameter selected when the radio frequency channel mapping data is generated, to improve performance of sensing-assisted communication.

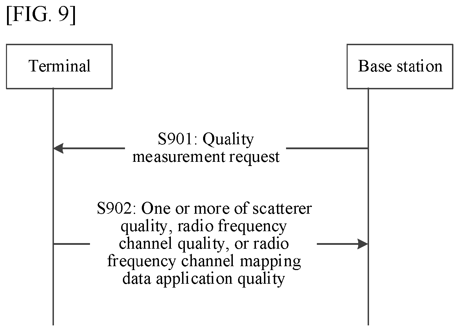

It should be noted that FIG. 5, FIG. 6, and FIG. 8 in embodiments of this application may be implemented as separate embodiments, or may be implemented as one embodiment by combining any two or three embodiments. The following provides descriptions with reference to FIG. 9.

FIG. 9 is an example flowchart of a method for evaluating radio frequency data according to an embodiment of this application. The method may include the following operations. In the method, a first communication apparatus in the sensing and communication node may initiate radio frequency channel quality evaluation to a second communication apparatus in the sensing and communication node. FIG. 9 uses an example in which the first communication apparatus is a base station and the second communication apparatus is a terminal.

S901: The base station sends a quality measurement request to the terminal.

Correspondingly, the terminal receives the quality measurement request from the base station.

For example, the base station may send one or more of a scatterer quality measurement request, a radio frequency channel quality measurement request, or a radio frequency channel mapping data application request to the terminal. For implementation, refer to S501, S601, or S801.

In a possible case, if radio frequency channel mapping data is stored by an LMF or an SMF, in S901, the LMF or the SMF may send the quality measurement request to the base station, and the base station may send the quality measurement request to the terminal.

S902: The terminal sends one or more of scatterer quality, radio frequency channel quality, or radio frequency channel mapping data application quality to the base station.

Correspondingly, the terminal receives one or more of the scatterer quality, the radio frequency channel quality, or the radio frequency channel mapping data application quality from the base station.

For example, the terminal may send one of the scatterer quality, the radio frequency channel quality, or the radio frequency channel mapping data application quality to the base station. For another example, the terminal may send a plurality of items among the scatterer quality, the radio frequency channel quality, and the radio frequency channel mapping data application quality to the base station. For example, the terminal may send the scatterer quality and the radio frequency channel quality to the base station; the terminal may send the scatterer quality and the radio frequency channel mapping data application quality to the base station; the terminal may send the radio frequency channel quality and the radio frequency channel mapping data application quality to the base station; or the terminal may send the scatterer quality, the radio frequency channel quality, and the radio frequency channel mapping data application quality to the base station.

In a possible implementation, when the terminal sends the plurality of items among the scatterer quality, the radio frequency channel quality, and the radio frequency channel mapping data application quality to the base station, one or two items among the plurality items meet a first sending condition.

For example, when the terminal sends the scatterer quality and the radio frequency channel quality to the base station, that one or two items among the plurality of items meet the first sending condition may be that one of the plurality of items meets the first sending condition, for example, the scatterer quality meets a first requirement. For implementation, refer to the embodiment shown in FIG. 5. Only when the scatterer quality meets the first requirement, the terminal and the base station evaluate radio frequency channel quality, and the terminal sends the radio frequency channel quality to the base station. When the scatterer quality does not meet the first requirement, the terminal and the base station do not evaluate radio frequency channel quality. The base station re-obtains an environment reconstruction result and re-evaluates scatterer quality with the terminal. The base station and the terminal do not evaluate radio frequency channel quality and the terminal does not send the radio frequency channel quality to the base station until the scatterer quality meets the first requirement, in other words, when the scatterer quality does not meet the first requirement, the terminal adjusts the scatterer quality to meet the first requirement before sending the radio frequency channel quality to the base station. For implementation, refer to the embodiment shown in FIG. 5.

For another example, when the terminal sends the scatterer quality and the radio frequency channel mapping data application quality to the base station, that one or two items among the plurality of items meet the first sending condition may be that one of the plurality of items meets the first sending condition, for example, the scatterer quality meets a first requirement. For implementation, refer to the embodiment shown in FIG. 5. When the scatterer quality meets the first requirement, the terminal and the base station evaluate radio frequency channel mapping data application quality, and the terminal sends the radio frequency channel mapping data application quality to the base station. When the scatterer quality does not meet the first requirement, the terminal and the base station do not evaluate radio frequency channel mapping data application quality. The base station re-obtains an environment reconstruction result and re-evaluates scatterer quality with the terminal. The base station and the terminal do not evaluate radio frequency channel mapping data application quality and the terminal may not send the radio frequency channel mapping data application quality to the base station until the scatterer quality meets the first requirement, in other words, when the scatterer quality does not meet the first requirement, the terminal adjusts the scatterer quality to meet the first requirement before sending the radio frequency channel mapping data application quality to the base station. For implementation, refer to the embodiment shown in FIG. 5.

For another example, when the terminal sends the radio frequency channel quality and the radio frequency channel mapping data application quality to the base station, that one or two items among the plurality of items meet the first sending condition may be that one of the plurality of items meets the first sending condition, for example, the radio frequency channel quality meets a second requirement. For implementation, refer to the embodiment shown in FIG. 6. When the radio frequency channel quality meets the second requirement, the terminal and the base station evaluate radio frequency channel mapping data application quality, and the terminal sends the radio frequency channel mapping data application quality to the base station. When the scatterer quality does not meet the second requirement, the terminal and the base station do not evaluate radio frequency channel mapping data application quality. The base station re-obtains the radio frequency channel mapping data and re-evaluates radio frequency channel quality with the terminal. The terminal and the base station do not evaluate radio frequency channel mapping data application quality and the terminal may not send the radio frequency channel mapping data application quality to the base station until the radio frequency channel quality meets the second requirement, in other words, when the radio frequency channel quality does not meet the second requirement, the terminal adjusts the radio frequency channel quality to meet the second requirement before sending the radio frequency channel mapping data application quality to the base station. For implementation, refer to the embodiment shown in FIG. 6.

For another example, when the terminal sends the scatterer quality, the radio frequency channel quality, and the radio frequency channel application quality to the base station, that one or two items among the plurality of items meet the first sending condition may be that two of the plurality of items meet the first sending condition, for example, the scatterer quality meets a first requirement, and the radio frequency channel quality meets a second requirement. For implementation, refer to the embodiments shown in FIG. 5 and FIG. 6. Only when the scatterer quality meets the first requirement and the radio frequency channel quality meets the second requirement, the terminal and the base station evaluate radio frequency channel mapping data application quality, and the terminal sends the radio frequency channel mapping data application quality to the base station. When the scatterer quality does not meet the first requirement, the terminal adjusts the scatterer quality to meet the first requirement before sending the radio frequency channel quality to the base station. For implementation, refer to the embodiment shown in FIG. 5. Similarly, when the scatterer quality does not meet the second requirement, the terminal adjusts the radio frequency channel quality to meet the second requirement before sending the radio frequency channel mapping data application quality to the base station. For implementation, refer to the embodiment shown in FIG. 6.

In this embodiment of this application, if the radio frequency channel mapping data application quality does not meet a third requirement, it may be considered that a compression manner of the radio frequency channel mapping data is incorrect, or a parameter selected when the radio frequency channel mapping data is generated is inaccurate. In this case, performance of performing sensing-assisted communication by the terminal based on the radio frequency channel mapping data is low. Therefore, the base station may adjust the compression manner of the radio frequency channel mapping data or the parameter selected when the radio frequency channel mapping data is generated, to improve performance of sensing-assisted communication.

When the radio frequency channel mapping data application quality meets the third requirement, the terminal may perform sensing-assisted communication by using the radio frequency channel mapping data, for example, first radio frequency channel mapping data. If the radio frequency channel mapping data application quality does not meet the third requirement, it may be considered that accuracy of the radio frequency channel mapping data is low. This problem may be caused by a fact that to reduce transmission pressure, the base station compresses the radio frequency channel mapping data and sends the compressed radio frequency channel mapping data to the terminal, and then the terminal decompresses the radio frequency channel mapping data, or may be caused by an inaccurate parameter, for example, a communication link, selected when the base station generates the radio frequency channel mapping data. Therefore, when the base station determines that the radio frequency channel mapping data application quality does not meet the third requirement, the base station may adjust the compression manner of the radio frequency channel mapping data or the parameter selected when the radio frequency channel mapping data is generated, and send adjusted radio frequency channel mapping data, for example, second radio frequency channel mapping data, to the terminal. The terminal may perform sensing-assisted communication based on the adjusted radio frequency channel mapping data.

In a possible scenario, a processing operation of the base station may be performed by a CU, and a transceiver operation of the base station may be performed by a DU or an RU. For example, the CU may be used to generate the quality measurement request, and the CU may send the quality measurement request to the DU. The DU may send the quality measurement request, or the DU may send the quality measurement request to the RU, and the RU sends the quality measurement request.

The DU may receive one or more of the scatterer quality, the radio frequency channel quality, or the radio frequency channel mapping data application quality, and send one or more of the scatterer quality, the radio frequency channel quality, or the radio frequency channel mapping data application quality to the CU. The CU determines whether the environment reconstruction result needs to be re-obtained, whether the radio frequency channel mapping data needs to be re-generated, or whether the parameter included in the radio frequency channel mapping data and/or the compression manner of the radio frequency channel mapping data need/needs to be re-selected. Optionally, the RU may receive one or more of the scatterer quality, the radio frequency channel quality, or the radio frequency channel mapping data application quality, and send one or more of the scatterer quality, the radio frequency channel quality, or the radio frequency channel mapping data application quality to the DU.

In another possible scenario, a processing operation of the base station may be performed by a CU-CP, and a transceiver operation of the base station may be performed by a DU or an RU. For example, the CU-CP may perform an operation of the CU, the DU may perform an operation of the DU, and the RU may perform an operation of the RU.

In an O-RAN scenario, an operation performed by the CU may be performed by an O-CU, an operation performed by the DU may be performed by an O-DU, an operation performed by the RU may be performed by an O-RU, and an operation performed by the CU-CP may be performed by an O-CU-CP.

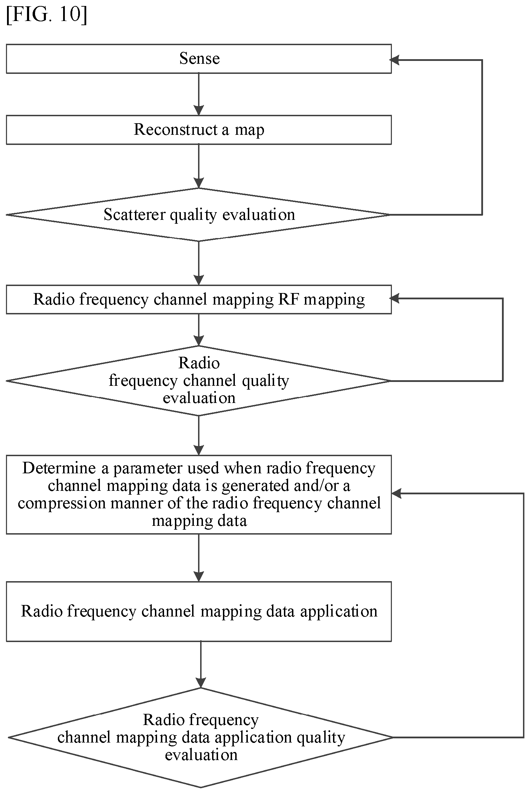

It can be learned from the embodiment shown in FIG. 9 that, in the method for evaluating radio frequency data provided in this embodiment of this application, a multilayer evaluation manner is used, for example, scatterer quality evaluation, radio frequency channel quality evaluation, and radio frequency channel mapping data application quality evaluation, to improve reliability and service performance of the radio frequency channel mapping data. The following describes a method for evaluating radio frequency data provided in an embodiment of this application with reference to FIG. 10.

As shown in FIG. 10, a sensing and communication node like a base station, a terminal, or a TRP, may obtain environment information through sensing, to determine an environment reconstruction result. For implementation, refer to the embodiments shown in FIG. 4A and FIG. 4B. A base station and a terminal may evaluate scatterer quality. For implementation, refer to the embodiment shown in FIG. 5. When the scatterer quality meets a first requirement, the terminal and the base station may generate radio frequency channel mapping data. For implementation, refer to the embodiments shown in FIG. 4C and FIG. 4D.

In a possible case, after the radio frequency channel mapping data is generated, the terminal and the base station may evaluate radio frequency channel quality. For implementation, refer to the embodiment shown in FIG. 6. If the radio frequency channel quality does not meet a second requirement, the base station may return to perform an operation of generating the radio frequency channel mapping data. If the radio frequency channel quality meets a second requirement, the base station may determine a parameter included in the radio frequency channel mapping data and/or determine a compression manner of the radio frequency channel mapping data, and the base station sends the radio frequency channel mapping data to the terminal. It may be understood that the radio frequency channel mapping data may be sent after being compressed. The terminal may restore the compressed radio frequency channel mapping data, and perform sensing-assisted communication based on the restored radio frequency channel mapping data. The terminal may determine radio frequency channel mapping data application quality of the radio frequency channel mapping data for sensing-assisted communication, and send the radio frequency channel mapping data application quality to the base station. If the radio frequency channel mapping data application quality meets a third requirement, the terminal continues using the radio frequency channel mapping data for sensing-assisted communication. If the radio frequency channel mapping data application quality does not meet a third requirement, the base station returns to perform an operation of determining the parameter used when the radio frequency channel mapping data is generated and/or determining the compression manner of the radio frequency channel mapping data.

In another possible case, after the radio frequency channel mapping data is generated, the base station may determine a parameter used when the radio frequency channel mapping data is generated and/or determine a compression manner of the radio frequency channel mapping data, and the base station sends the radio frequency channel mapping data to the terminal. It may be understood that the radio frequency channel mapping data may be sent after being compressed. The terminal may restore the compressed radio frequency channel mapping data, and perform sensing-assisted communication based on the restored radio frequency channel mapping data. The terminal may determine radio frequency channel mapping data application quality of the radio frequency channel mapping data for sensing-assisted communication, and send the radio frequency channel mapping data application quality to the base station. If the radio frequency channel mapping data application quality meets a third requirement, the terminal continues using the radio frequency channel mapping data for sensing-assisted communication. If the radio frequency channel mapping data application quality does not meet a third requirement, the base station returns to perform an operation of determining the parameter used when the radio frequency channel mapping data is generated and/or determining the compression manner of the radio frequency channel mapping data.

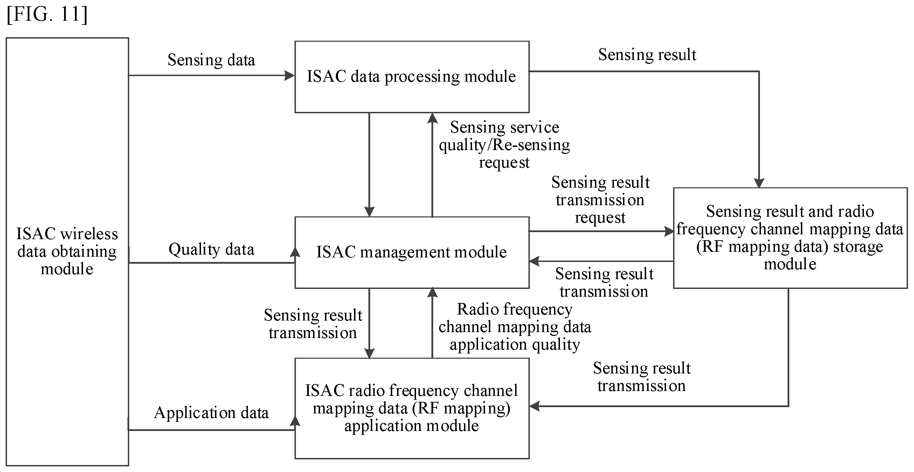

In a possible implementation, the radio frequency channel mapping data may be managed by using functions and modules in an integrated sensing and communication/joint communication and sensing (integrated sensing and communication/joint communication and sensing, ISAC) system. It may be understood that the ISAC system may be disposed in a base station, a terminal, a TRP, or CPE. Refer to FIG. 11, an ISAC wireless data obtaining module may obtain sensing data of each sensing and communication node, and send the sensing data to an ISAC data processing module, and the ISAC data processing module generates a sensing result, that is, generates radio frequency channel mapping data. The ISAC data processing module may send the radio frequency channel mapping data to a sensing result and RF mapping data storage module for storage. An ISAC management module may send a sensing result obtaining request (sensing result transferring request) to the sensing result and RF mapping data storage module, to request to obtain the sensing result, that is, the radio frequency channel mapping data. The sensing result and RF mapping data storage module may send the radio frequency channel mapping data to the ISAC management module. An ISAC RF mapping application module may send a radio frequency channel data application request to the ISAC management module, and the ISAC management module sends the radio frequency channel mapping data to the ISAC RF mapping application module for sensing-assisted communication, for example, energy saving, beamforming or beamforming, positioning, or multiple-input multiple-output (multiple-input multiple-output, MIMO) data transmission.

The ISAC wireless data obtaining module may further obtain quality data, such as scatterer quality or radio frequency channel quality, and send the quality data to the ISAC management module, so that the ISAC management module determines whether re-sensing is required. If the ISAC management module determines that the re-sensing is required, the ISAC management module may send a re-sensing request to the ISAC data processing module, and the ISAC data processing module may re-sense or re-generate the radio frequency channel mapping data. The ISAC management module may further send the scatterer quality, the radio frequency channel quality, or the like to the ISAC data processing module. The ISAC wireless data obtaining module may further obtain application data, for example, radio frequency channel mapping data application quality, an ACK, a NACK, or QoS. The ISAC wireless data obtaining module may send the application data to the ISAC RF mapping application module, and the ISAC RF mapping application module may send the application data to the ISAC management module. The ISAC management module determines whether a parameter included in and/or a compression manner of the radio frequency channel mapping data need/needs to be re-selected. The ISAC management module may alternatively send the radio frequency channel mapping data application quality to the ISAC data processing module.

It may be understood that names of the modules shown in FIG. 11 are merely examples, and do not constitute a limitation on names of the modules in the ISAC system.

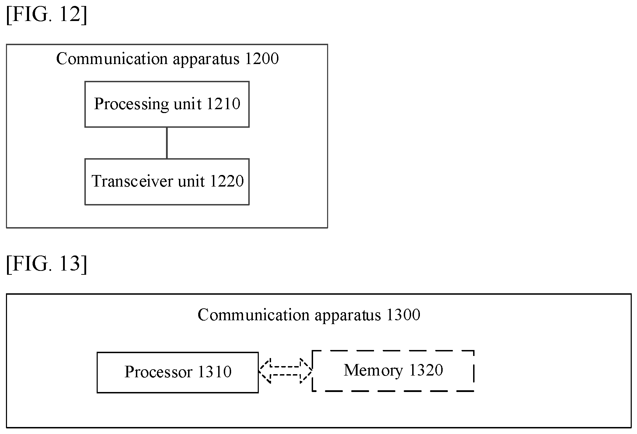

Communication apparatuses provided in embodiments of this application are described based on the following embodiments. FIG. 12 is a block diagram of a communication apparatus 1200 according to an embodiment of this application. The communication apparatus 1200 may correspondingly implement functions or steps implemented by the first communication apparatus or the second communication apparatus in the foregoing method embodiments. The communication apparatus may include a processing unit 1210 and a transceiver unit 1220. Optionally, a storage unit may be further included. The storage unit may be configured to store instructions (code or a program) and/or data. The processing unit 1210 and the transceiver unit 1220 may be coupled to the storage unit. For example, the processing unit 1210 may read the instructions (the code or the program) and/or the data in the storage unit, to implement a corresponding method. The foregoing units may be independently disposed, or may be partially or completely integrated.

Optionally, the transceiver unit 1220 may include a sending unit and a receiving unit. The sending unit may be configured to perform all sending operations performed by the communication apparatus 1200, and the receiving unit may be configured to perform all receiving operations performed by the communication apparatus 1200.

In some possible implementations, the communication apparatus 1200 can correspondingly implement behavior and functions of the first communication apparatus in the foregoing method embodiments. For example, the communication apparatus 1200 may be the first communication apparatus, or may be a component (for example, a chip or a circuit) used in the first communication apparatus. The transceiver unit 1220 may be configured to perform all receiving or sending operations performed by the first communication apparatus in the embodiments shown in FIG. 5 to FIG. 8, for example, S801 in the embodiment shown in FIG. 8, and/or configured to support another process in the technology described in this specification. The processing unit 1210 is configured to perform all operations performed by the first communication apparatus in the embodiment shown in FIG. 5 to FIG. 8 except receiving and sending operations.

For example, the transceiver unit 1220 is configured to receive a quality measurement request. The processing unit 1210 is configured to determine, based on the quality measurement request, one or more of scatterer quality, radio frequency channel quality, and radio frequency channel mapping data application quality. The scatterer quality represents accuracy of a location of a scatterer included in first radio frequency channel mapping data, the radio frequency channel quality represents a deviation between a channel state measurement value and a predicted channel state value included in the first radio frequency channel mapping data, and the radio frequency channel mapping data application quality represents usage quality of the first radio frequency channel mapping data. The transceiver unit 1220 is further configured to send one or more of the scatterer quality, the radio frequency channel quality, and the radio frequency channel mapping data application quality.

In some possible implementations, the communication apparatus 1200 can correspondingly implement behavior and functions of the second communication apparatus in the foregoing method embodiments. For example, the communication apparatus 1200 may be the second communication apparatus, or may be a component (for example, a chip or a circuit) used in the second communication apparatus. The transceiver unit 1220 may be configured to perform all receiving or sending operations performed by the second communication apparatus in the embodiments shown in FIG. 5 to FIG. 8, for example, S801 in the embodiment shown in FIG. 8, and/or configured to support another process in the technology described in this specification. The processing unit 1210 is configured to perform all operations performed by the second communication apparatus in the embodiment shown in FIG. 5 to FIG. 8 except receiving and sending operations.

For example, the processing unit 1210 is configured to generate a quality measurement request. The transceiver unit 1220 is configured to send the quality measurement request. The transceiver unit 1220 is further configured to receive one or more of scatterer quality, radio frequency channel quality, and radio frequency channel mapping data application quality. The scatterer quality represents accuracy of a location of a scatterer included in first radio frequency channel mapping data, the radio frequency channel quality represents a deviation between a channel state measurement value and a predicted channel state value included in the first radio frequency channel mapping data, and the radio frequency channel mapping data application quality represents usage quality of the first radio frequency channel mapping data.

For operations performed by the processing unit 1210 and the transceiver unit 1220, refer to the related descriptions in the foregoing method embodiments.

It should be understood that the processing unit 1210 in this embodiment of this application may be implemented by a processor or a processor-related circuit component, and the transceiver unit 1220 may be implemented by a transceiver, a transceiver-related circuit component, or a communication interface.

Based on a same concept, as shown in FIG. 13, an embodiment of this application provides a communication apparatus 1300. The communication apparatus 1300 includes a processor 1310. Optionally, the communication apparatus 1300 may further include a memory 1320, configured to store instructions executed by the processor 1310, input data needed by the processor 1310 to run the instructions, or data generated by running the instructions by the processor 1310. The processor 1310 may implement the methods shown in the foregoing method embodiments by using the instructions stored in the memory 1320.

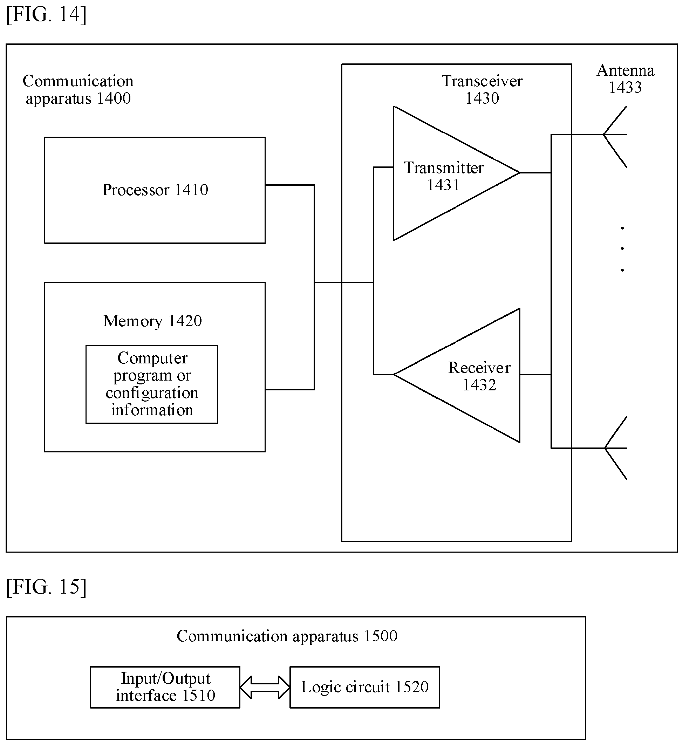

Based on a same concept, as shown in FIG. 14, an embodiment of this application provides a communication apparatus 1400. The communication apparatus 1400 may be a chip or a chip system. Optionally, in this embodiment of this application, the chip system may include a chip, or may include a chip and another discrete device.

The communication apparatus 1400 may include at least one processor 1410. The processor 1410 is coupled to a memory. Optionally, the memory may be located inside the apparatus, or may be located outside the apparatus. For example, the communication apparatus 1400 may further include at least one memory 1420. The memory 1420 stores a computer program, configuration information, a computer program or instructions, and/or data necessary for implementing any one of the foregoing embodiments. The processor 1410 may execute the computer program stored in the memory 1420, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 1410 may cooperate with the memory 1420. A specific connection medium between a transceiver 1430, the processor 1410, and the memory 1420 is not limited in this embodiment of this application.

The communication apparatus 1400 may further include the transceiver 1430, and the communication apparatus 1400 may exchange information with another device via the transceiver 1430. The transceiver 1430 may be a circuit, a bus, a transceiver, or any other apparatus that may be configured to exchange information, or is referred to as a signal transceiver unit. As shown in FIG. 14, the transceiver 1430 includes a transmitter 1431, a receiver 1432, and an antenna 1433. In addition, when the communication apparatus 1400 is a chip-type apparatus or a circuit, the transceiver in the communication apparatus 1400 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 1400 may be used in a first communication apparatus. Specifically, the communication apparatus 1400 may be the first communication apparatus, or may be an apparatus that can support the first communication apparatus to implement a function of the first communication apparatus in any one of the foregoing embodiments. The memory 1420 stores a necessary computer program, a computer program or instructions, and/or data necessary for implementing a function of the communication apparatus in any one of the foregoing embodiments. The processor 1410 may execute the computer program stored in the memory 1420, to complete the method performed by the first communication apparatus in any one of the foregoing embodiments.

In a possible implementation, the communication apparatus 1400 may be used in a second communication apparatus. Specifically, the communication apparatus 1400 may be the second communication apparatus, or may be an apparatus that can support the second communication apparatus to implement a function of the second communication apparatus in any one of the foregoing embodiments. The memory 1420 stores a necessary computer program, a computer program or instructions, and/or data for implementing a function of the second communication apparatus in any one of the foregoing embodiments. The processor 1410 may execute the computer program stored in the memory 1420, to complete the method performed by the second communication apparatus in any one of the foregoing embodiments.

The communication apparatus 1400 provided in this embodiment may be used in the first communication apparatus to complete the method performed by the first communication apparatus, or may be used in the second communication apparatus to complete the method performed by the second communication apparatus. Therefore, for technical effects that can be achieved by this embodiment, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed and completed by a hardware processor, or may be performed and completed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store a computer program, a computer program or instructions, and/or data.

Refer to FIG. 15. According to the foregoing embodiments, an embodiment of this application further provides another communication apparatus 1500, including an input/output interface 1510 and a logic circuit 1520. The input/output interface 1510 is configured to receive code instructions and transmit the code instructions to the logic circuit 1520. The logic circuit 1520 is configured to run the code instructions to perform the method performed by the first communication apparatus or the second communication apparatus in any one of the foregoing embodiments.

Optionally, the input/output interface 1510 may be an interface on a chip, and the logic circuit 1520 may be one or more processors. Optionally, the one or more processors may be located inside the apparatus, or may be located outside the apparatus.

The following describes in detail operations performed by the communication apparatus when the communication apparatus is used in the first communication apparatus or the second communication apparatus.

In an optional implementation, the communication apparatus 1500 may be used in the first communication apparatus to perform the method performed by the first communication apparatus, specifically, for example, the method performed by the first communication apparatus in the embodiments shown in FIG. 5 to FIG. 8.

For example, the input/output interface 1510 is configured to receive a quality measurement request. The logic circuit 1520 is configured to determine, based on the quality measurement request, one or more of scatterer quality, radio frequency channel quality, and radio frequency channel mapping data application quality. The scatterer quality represents accuracy of a location of a scatterer included in first radio frequency channel mapping data, the radio frequency channel quality represents a deviation between a channel state measurement value and a predicted channel state value included in the first radio frequency channel mapping data, and the radio frequency channel mapping data application quality represents usage quality of the first radio frequency channel mapping data. The input/output interface 1510 is further configured to send one or more of the scatterer quality, the radio frequency channel quality, and the radio frequency channel mapping data application quality.

The communication apparatus 1500 provided in this embodiment may be used in the first communication apparatus to complete the method performed by the first communication apparatus. Therefore, for technical effects that can be achieved by this embodiment, refer to the foregoing method embodiments. Details are not described herein again.

In an optional implementation, the communication apparatus 1500 may be used in the second communication apparatus to perform the method performed by the second communication apparatus, specifically, for example, the method performed by the second communication apparatus in the embodiments shown in FIG. 5 to FIG. 8.

For example, the logic circuit 1520 is configured to generate a quality measurement request. The input/output interface 1510 is configured to send the quality measurement request. The input/output interface 1510 is further configured to receive one or more of scatterer quality, radio frequency channel quality, and radio frequency channel mapping data application quality. The scatterer quality represents accuracy of a location of a scatterer included in first radio frequency channel mapping data, the radio frequency channel quality represents a deviation between a channel state measurement value and a predicted channel state value included in the first radio frequency channel mapping data, and the radio frequency channel mapping data application quality represents usage quality of the first radio frequency channel mapping data.

The communication apparatus 1500 provided in this embodiment may be used in the second communication apparatus to complete the method performed by the second communication apparatus. Therefore, for technical effects that can be achieved by this embodiment, refer to the foregoing method embodiments. Details are not described herein again.

According to the foregoing embodiments, an embodiment of this application further provides a communication system. The communication system includes at least one communication apparatus used in a first communication apparatus and at least one communication apparatus used in a second communication apparatus. For technical effects that can be achieved, refer to the foregoing method embodiments. Details are not described herein again.

According to the foregoing embodiments, an embodiment of this application further provides a system. The communication system includes at least one second communication apparatus and a first communication apparatus.

According to the foregoing embodiments, an embodiment of this application further provides a computer-readable storage medium. The computer-readable storage medium stores a computer program or instructions. When the instructions are executed, the method performed by the first communication apparatus or the method performed by the second communication apparatus in any one of the foregoing embodiments is implemented. The computer-readable storage medium may include any medium that can store program code, such as a USB flash drive, a removable hard disk drive, a read-only memory, a random access memory, a magnetic disk, or an optical disc.

To implement functions of the communication apparatuses in FIG. 12 to FIG. 15, an embodiment of this application further provides a chip, including a processor, configured to support the communication apparatus in implementing functions of the first communication apparatus or the second communication apparatus in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or the instructions may alternatively be stored in a computer-readable memory that can indicate a computer or another programmable data processing device to operate in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams. It is clear that a person skilled in the art may make various modifications and variations to embodiments of this application without departing from the scope of embodiments of this application. In this case, this application is intended to cover these modifications and variations of embodiments of this application provided that they fall within the scope of protection defined by the claims of this application and their equivalent technologies.

## Claims

1. A method for evaluating radio frequency data, comprising:
receiving a quality measurement request; and
sending, based on the quality measurement request, one or more of scatterer quality, radio frequency channel quality, and radio frequency channel mapping data application quality, wherein
the scatterer quality represents accuracy of a location of a scatterer comprised in first radio frequency channel mapping data, the radio frequency channel quality represents a deviation between a channel state measurement value and a predicted channel state value comprised in the first radio frequency channel mapping data, and the radio frequency channel mapping data application quality represents usage quality of the first radio frequency channel mapping data.

2. The method according to claim 1, wherein the sending one or more of the scatterer quality, the radio frequency channel quality, and the radio frequency channel mapping data application quality comprises:
sending a plurality of items among the scatterer quality, the radio frequency channel quality, and the radio frequency channel mapping data application quality, wherein one or two items among the scatterer quality, the radio frequency channel quality, and the radio frequency channel mapping data application quality meet a first sending condition.

3. The method according to claim 2, wherein the plurality of items comprise the scatterer quality and the radio frequency channel quality, and meeting the first sending condition comprises the scatterer quality meeting a first requirement.

4. The method according to claim 2, wherein the plurality of items comprise the scatterer quality and the radio frequency channel mapping data application quality, and meeting the first sending condition comprises the scatterer quality meeting a first requirement.

5. The method according to claim 2, wherein the plurality of items comprise the radio frequency channel quality and the radio frequency channel mapping data application quality, and meeting the first sending condition comprises the radio frequency channel quality meeting a second requirement.

6. The method according to claim 2, wherein the plurality of items comprise the scatterer quality, the radio frequency channel quality, and the radio frequency channel mapping data application quality, and meeting the first sending condition comprises the scatterer quality meeting a first requirement and the radio frequency channel quality meeting a second requirement.

7. The method according to claim 1, wherein the sending the plurality of items among the scatterer quality, the radio frequency channel quality, and the radio frequency channel mapping data application quality comprises:
adjusting, if the scatterer quality does not meet a first requirement, the scatterer quality to meet the first requirement before sending the radio frequency channel quality.

8. The method according to claim 1, wherein the sending the plurality of items among the scatterer quality, the radio frequency channel quality, and the radio frequency channel mapping data application quality comprises:
adjusting, if the scatterer quality does not meet a first requirement, the scatterer quality to meet the first requirement before sending the radio frequency channel mapping data application quality; or
adjusting, if the radio frequency channel quality does not meet a second requirement, the radio frequency channel quality to meet the second requirement before sending the radio frequency channel mapping data application quality.

9. The method according to any one of claims 1 to 8, further comprising:
receiving, if the radio frequency channel mapping data application quality does not meet a third requirement, second radio frequency channel mapping data, wherein a parameter comprised in the second radio frequency channel mapping data is different from a parameter comprised in the first radio frequency channel mapping data, and/or a compression manner of the second radio frequency channel mapping data is different from a compression manner of the first radio frequency channel mapping data.

10. A method for evaluating radio frequency data, comprising:
sending a quality measurement request; and
receiving one or more of scatterer quality, radio frequency channel quality, and radio frequency channel mapping data application quality, wherein
the scatterer quality represents accuracy of a location of a scatterer comprised in first radio frequency channel mapping data, the radio frequency channel quality represents a deviation between a channel state measurement value and a predicted channel state value comprised in the first radio frequency channel mapping data, and the radio frequency channel mapping data application quality represents usage quality of the first radio frequency channel mapping data.

11. The method according to claim 10, wherein the receiving one or more of the scatterer quality, the radio frequency channel quality, and the radio frequency channel mapping data application quality comprises:
receiving a plurality of items among the scatterer quality, the radio frequency channel quality, and the radio frequency channel mapping data application quality, wherein one or two items among the scatterer quality, the radio frequency channel quality, and the radio frequency channel mapping data application quality meet a first sending condition.

12. The method according to claim 11, wherein the plurality of items comprise the scatterer quality and the radio frequency channel quality, and meeting the first sending condition comprises the scatterer quality meeting a first requirement.

13. The method according to claim 11, wherein the plurality of items comprise the scatterer quality and the radio frequency channel mapping data application quality, and meeting the first sending condition comprises the scatterer quality meeting a first requirement.

14. The method according to claim 11, wherein the plurality of items comprise the radio frequency channel quality and the radio frequency channel mapping data application quality, and meeting the first sending condition comprises the radio frequency channel quality meeting a second requirement.

15. The method according to claim 11, wherein the plurality of items comprise the scatterer quality, the radio frequency channel quality, and the radio frequency channel mapping data application quality, and meeting the first sending condition comprises the scatterer quality meeting a first requirement, and the radio frequency channel quality meets a second requirement.

16. The method according to any one of claims 10 to 15, further comprising:
if the radio frequency channel mapping data application quality does not meet a third requirement, sending second radio frequency channel mapping data, wherein a parameter comprised in the second radio frequency channel mapping data is different from a parameter comprised in the first radio frequency channel mapping data, and/or a compression manner of the second radio frequency channel mapping data is different from a compression manner of the first radio frequency channel mapping data.

17. A communication apparatus, comprising:
a transceiver unit, configured to receive a quality measurement request; and
a processing unit, configured to determine, based on the quality measurement request,
one or more of scatterer quality, radio frequency channel quality, and radio frequency channel mapping data application quality, wherein the scatterer quality represents accuracy of a location of a scatterer comprised in first radio frequency channel mapping data, the radio frequency channel quality represents a deviation between a channel state measurement value and a predicted channel state value comprised in the first radio frequency channel mapping data, and the radio frequency channel mapping data application quality represents usage quality of the first radio frequency channel mapping data, wherein
the transceiver unit is further configured to send one or more of the scatterer quality, the radio frequency channel quality, and the radio frequency channel mapping data application quality.

18. The apparatus according to claim 17, wherein the transceiver unit is specifically configured to send a plurality of items among the scatterer quality, the radio frequency channel quality, and the radio frequency channel mapping data application quality, wherein
one or two items among the scatterer quality, the radio frequency channel quality, and the radio frequency channel mapping data application quality meet a first sending condition.

19. The apparatus according to claim 18, wherein the plurality of items comprise the scatterer quality and the radio frequency channel quality, and meeting the first sending condition comprises the scatterer quality meeting a first requirement.

20. The apparatus according to claim 18, wherein the plurality of items comprise the scatterer quality and the radio frequency channel mapping data application quality, and meeting the first sending condition comprises the scatterer quality meeting a first requirement.

21. The apparatus according to claim 18, wherein the plurality of items comprise the radio frequency channel quality and the radio frequency channel mapping data application quality, and meeting the first sending condition comprises the radio frequency channel quality meeting a second requirement.

22. The apparatus according to claim 18, wherein the plurality of items comprise the scatterer quality, the radio frequency channel quality, and the radio frequency channel mapping data application quality, and meeting the first sending condition comprises the scatterer quality meeting a first requirement, and the radio frequency channel quality meets a second requirement.

23. The apparatus according to claim 17, wherein the transceiver unit is specifically configured to:
adjust, if the scatterer quality does not meet a first requirement, the scatterer quality to meet the first requirement before sending the radio frequency channel quality.

24. The apparatus according to claim 17, wherein the transceiver unit is specifically configured to:
adjust, if the scatterer quality does not meet a first requirement, the scatterer quality to meet the first requirement before sending the radio frequency channel mapping data application quality; or
adjust, if the radio frequency channel quality does not meet a second requirement, the radio frequency channel quality to meet the second requirement before sending the radio frequency channel mapping data application quality.

25. The apparatus according to any one of claims 17 to 24, wherein the transceiver unit is further configured to:
receive, if the radio frequency channel mapping data application quality does not meet a third requirement, second radio frequency channel mapping data, wherein a parameter comprised in the second radio frequency channel mapping data is different from a parameter comprised in the first radio frequency channel mapping data, and/or a compression manner of the second radio frequency channel mapping data is different from a compression manner of the first radio frequency channel mapping data.

26. A communication apparatus, comprising:
a processing unit, configured to generate a quality measurement request; and
a transceiver unit, configured to send the quality measurement request, wherein
the transceiver unit is further configured to receive one or more of scatterer quality, radio frequency channel quality, and radio frequency channel mapping data application quality, wherein
the scatterer quality represents accuracy of a location of a scatterer comprised in first radio frequency channel mapping data, the radio frequency channel quality represents a deviation between a channel state measurement value and a predicted channel state value comprised in the first radio frequency channel mapping data, and the radio frequency channel mapping data application quality represents usage quality of the first radio frequency channel mapping data.

27. The apparatus according to claim 26, wherein the transceiver unit is specifically configured to:
receive a plurality of items among the scatterer quality, the radio frequency channel quality, and the radio frequency channel mapping data application quality, wherein one or two items among the scatterer quality, the radio frequency channel quality, and the radio frequency channel mapping data application quality meet a first sending condition.

28. The apparatus according to claim 27, wherein the plurality of items comprise the scatterer quality and the radio frequency channel quality, and meeting the first sending condition comprises the scatterer quality meeting a first requirement.

29. The apparatus according to claim 27, wherein the plurality of items comprise the scatterer quality and the radio frequency channel mapping data application quality, and meeting the first sending condition comprises the scatterer quality meeting a first requirement.

30. The apparatus according to claim 27, wherein the plurality of items comprise the radio frequency channel quality and the radio frequency channel mapping data application quality, and meeting the first sending condition comprises the radio frequency channel quality meeting a second requirement.

31. The apparatus according to claim 27, wherein the plurality of items comprise the scatterer quality, the radio frequency channel quality, and the radio frequency channel mapping data application quality, and meeting the first sending condition comprises the scatterer quality meeting a first requirement, and the radio frequency channel quality meets a second requirement.

32. The apparatus according to any one of claims 26 to 31, wherein the transceiver unit is further configured to:
if the radio frequency channel mapping data application quality does not meet a third requirement, send second radio frequency channel mapping data, wherein a parameter comprised in the second radio frequency channel mapping data is different from a parameter comprised in the first radio frequency channel mapping data, and/or a compression manner of the second radio frequency channel mapping data is different from a compression manner of the first radio frequency channel mapping data.

33. A communication apparatus, comprising a unit configured to perform the method according to any one of claims 1 to 9, or comprising a unit configured to perform the method according to any one of claims 10 to 16.

34. A computer-readable storage medium, wherein the computer-readable storage medium stores computer-executable instructions; and when the computer-executable instructions are invoked by an electronic apparatus, the electronic apparatus is enabled to perform the method according to any one of claims 1 to 9, or the electronic apparatus is enabled to perform the method according to any one of claims 10 to 16.

35. A communication system, comprising an apparatus configured to perform the method according to any one of claims 1 to 9 and an apparatus configured to perform the method according to any one of claims 10 to 16.

36. A chip system, wherein the chip system comprises:
a communication interface; and
a processor, configured to invoke and run the instructions through the communication interface, to enable a device installed with the chip system to perform the method according to any one of claims 1 to 9, or to enable a device installed with the chip system to perform the method according to any one of claims 10 to 16.

37. A computer program product, comprising computer-executable instructions, wherein when the computer-executable instructions are run on a computer, the computer is enabled to perform the method according to any one of claims 1 to 9, or the electronic apparatus is enabled to perform the method according to any one of claims 10 to 16.
